(19) Europäisches Patentamt / European Patent Office / Office européen des brevets

(11) **EP 3 767 533 B1**

(12) **EUROPEAN PATENT SPECIFICATION**

(45) Date of publication and mention
of the grant of the patent:
**20.05.2026 Bulletin 2026/21**

(51) International Patent Classification (IPC):
**G06F 18/214** (2023.01)  **G06F 18/2413** (2023.01)
**G06F 18/27** (2023.01)  **G06N 3/047** (2023.01)
**G06N 3/044** (2023.01)  **G06N 3/045** (2023.01)
**G06N 3/0455** (2023.01)  **G06N 3/08** (2023.01)
**G06N 3/084** (2023.01)  **G06N 3/088** (2023.01)
**G06N 7/01** (2023.01)

(21) Application number: **19186779.5**

(22) Date of filing: **17.07.2019**

(52) Cooperative Patent Classification (CPC):
**G06F 18/214; G06F 18/27; G06N 3/044;
G06N 3/045; G06N 3/0455; G06N 3/047;
G06N 3/08; G06N 3/084; G06N 3/088; G06N 7/01;**
G06F 18/24133

(54) **A MACHINE LEARNABLE SYSTEM WITH NORMALIZING FLOW**

MASCHINELL LERNENDES SYSTEM MIT NORMALISIERENDER STRÖMUNG

SYSTÈME POUVANT ÊTRE APPRIS PAR MACHINE AVEC UN ÉCOULEMENT DE NORMALISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.01.2021 Bulletin 2021/03**

(73) Proprietor: **Robert Bosch GmbH
70442 Stuttgart (DE)**

(72) Inventors:
• **Straehle, Christoph-Nikolas
71263 Weil Der Stadt (DE)**
• **Bhattacharyya, Apratim
66125 Saarbruecken (DE)**

(56) References cited:
**US-A1- 2019 095 798**

• YOU LU ET AL: "Structured Output Learning with Conditional Generative Flows", ARXIV.ORG, CORNELL UNIVERSITY LIBRARY, 201 OLIN LIBRARY CORNELL UNIVERSITY ITHACA, NY 14853, 30 May 2019 (2019-05-30), XP081366227

• ZACHARY M ZIEGLER ET AL: "Latent Normalizing Flows for Discrete Sequences", ARXIV.ORG, CORNELL UNIVERSITY LIBRARY, 201 OLIN LIBRARY CORNELL UNIVERSITY ITHACA, NY 14853, 29 January 2019 (2019-01-29), XP081369467

• TOMCZAK JAKUB M ET AL: "Improving Variational Auto-Encoders using Householder Flow", 17 January 2017 (2017-01-17), pages 1 - 8, XP093207151, Retrieved from the Internet <URL:https://arxiv.org/pdf/1611.09630> [retrieved on 20240920]

• ANDREI ATANOV ET AL: "Semi-Conditional Normalizing Flows for Semi-Supervised Learning", ARXIV.ORG, CORNELL UNIVERSITY LIBRARY, 201 OLIN LIBRARY CORNELL UNIVERSITY ITHACA, NY 14853, 1 May 2019 (2019-05-01), XP081271279

## Description

### FIELD OF THE INVENTION

The invention relates to a machine learnable system, a machine learnable data generation system, a machine learning method, a machine learnable data generation method, and a computer readable medium.

### BACKGROUND

Generating data according to a learned distribution plays a key role during the development of various machine learning systems. For example, data may be generated that is like data that has been previously measured using sensors. For example, such data may be used to train or test further devices, possibly further machine learning devices. For example, given sensor data comprising street sensor data may be available, e.g., from an image sensor, or from a lidar, possibly in the form of multiple images, e.g., a video, it may be desired to generate more of this data. For example, a database of images comprising, say traffic participants or road signs or the like may be available, to test or train another device, e.g., an autonomous vehicle it may be desirable to generate further image like the known traffic participants or road signs, etc.

Likewise, anticipating the future states of an agent or interacting agents in an environment is a key competence for the successful operation of autonomous agents. For example, in many scenarios this can be cast as a generation problem or sequence of generation problems. In complex environments like real world traffic scenes, the future is highly uncertain and thus demands structured generations, e.g., in the form of one to many mappings. For example, by predicting the likely future states of the world.

In "Learning Structured Output Representation using Deep Conditional Generative Models", by Kihyuk Sohn, a conditional variational autoencoder (CVAE) is described. CVAE is a conditional generative model for output generation using Gaussian latent variables. The model is trained in the framework of stochastic gradient variational Bayes, and allows for generation using stochastic feed-forward inference.

CVAEs can model complex multi-modal distributions by factorizing the distribution of future states using a set of latent variables, which are then mapped to likely future states. Although CVAE are a versatile class of models that can successfully model future states of the world under uncertainty, it was found to have drawbacks. For example: a CVAE is prone to over-regularization, the model finds it difficult to capture multi-modal distribution, and latent variable collapse was observed.

In case of posterior collapse, the conditional decoding network forgets about low intensity modes of the conditional probability distributions. This can lead to unimodal generations and bad learning of the probability distribution. For example, in traffic participant generation, the modes of the conditional probability distribution which correspond to less likely events, such as a pedestrian entering/crossing the street, appear not to be generated at all.

US 2019/095798 A1 describes computer systems and methods that generate a stochastic categorical auto-encoder learning network (SCAN). The SCAN is trained to have an encoder network that outputs, subject to one or more constraints, parameters for parametric probability distributions of sample random variables from input data. The parameters comprise measures of central tendency and measures of dispersion. "Structured Output Learning with Conditional Generative Flows", You Lu et al,

(arXiv:1905.13288 - available at: https://arxiv.org/abs/1905.13288), 30 May 2019, describes a structured output learning with conditional generative flows. Traditional structured prediction models try to learn the conditional likelihood, i.e. $p(y \mid x)$, to capture the relationship between the structured output y and the input features x. For many models, computing the likelihood is intractable. These models are therefore hard to train, requiring the use of surrogate objectives or variational inference to approximate likelihood. This document proposes conditional Glow (c-Glow), a conditional generative flow for structured output learning.

"Latent Normalizing Flows for Discrete Sequences", Zachary M Ziegler et al, (arXiv:1901.10548 - available at: https://arxiv.org/abs/1901.10548), 4 June 2019, describes normalizing flows as a powerful class of generative models for continuous random variables, showing both strong model flexibility and the potential for non-autoregressive generation. These benefits are also desired when modeling discrete random variables such as text, but directly applying normalizing flows to discrete sequences poses significant additional challenges. This paper proposes a VAE-based generative model which jointly learns a normalizing flow-based distribution in the latent space and a stochastic mapping to an observed discrete space.

Tomczak Jakub M ET AL: "Improving Variational Auto-Encoders using Householder Flow", 17 January 2017 (2017-01-17), pages 1-8, URL:https://arxiv.org/pdf/1611.09630, proposes a Variational auto-encoder with a volume-preserving flow that uses a series of Householder transformations.

**EP 3 767 533 B1**

## SUMMARY OF THE INVENTION

It would be advantageous to have an improved system for data generation and a corresponding training system. The invention is defined by the independent claims; the dependent claims define advantageous embodiments.

A machine learnable system is configured for an encoder function mapping a data generation target in a target space to a latent representation in a latent space, a decoder function mapping a latent representation in the latent space to a target representation in the target space, and a normalizing flow function mapping a latent representation to a base point in a base space conditional on conditioning data.

The encoder function and decoder function are arranged to generate parameters defining at least a mean value of a probability distribution, a function output of the encoder function and decoder function being determined by sampling the defined probability distribution having the generated mean value, wherein the probability distributions defined by the encoder function have a predetermined variance.

VAE and CVAE models assume a standard Gaussian prior on the latent variables. It was found that this prior plays a role in the quality of generations, the tendency of a CVAE to over-regularization, its difficulty in capturing multi-modal distributions, and latent variable collapse.

In an embodiment, probability distributions are modelled using a variational autoencoder with a flexible prior. This improves at least some of these problems, e.g., the posterior collapse problem of CVAEs. Moreover, forcing the encoder part of the encoder/decoder part to have a fixed variance was found to improve the learning in experiments considerably.

The machine learnable system with flow based priors can be used to learn the probability distribution of arbitrary data such as image, audio, video or other data obtained from sensor readings. Applications for learned generative models include but are not limited to, traffic participant trajectory generation, generative classifiers, and synthetic data generation for example for training data or validation purposes.

In an embodiment, the normalizing flow function comprises a sequence of multiple invertible normalizing flow sub-functions, one or more parameters of the multiple invertible normalizing flow sub-functions being generated by a neural network. In particular, it was found that using non-linear normalizing flow sub-functions for one or more of the sub-functions improved the ability to learn difficult probability distributions on the latent space, e.g., having one or more modes, in particular minor modes.

A further aspect concerns a machine learnable generation system, configured to make a generation, e.g., by obtaining a base point in a base space, applying the inverse conditional normalizing flow function to the base point conditional on the conditional data to obtain a latent representation, and applying the decoder function to the latent representation to obtain the generation target.

In an embodiment, the machine learnable generation system is comprised in an autonomous device controller. For example, the conditioning data may comprise sensor data of an autonomous device. The machine learnable generation system may be configured to classify objects in the sensor data and/or to predict future sensor data. The autonomous device controller may be configured for decision-making depending on the classification. For example, the autonomous device controller may be configured and/or comprised in an autonomous vehicle, e.g., a car. For example, autonomous device controller may be used to classify other traffic participants and/or to predict their future behavior. The autonomous device controller may be configured to adapt control of the autonomous device, e.g., in case a future trajectory of another traffic participant crosses the trajectory of the autonomous device.

A machine learnable system and a machine learnable generation system are electronic. The systems may be comprised in another physical device or system, e.g., a technical system, for controlling the physical device or system, e.g., its movement. The machine learnable system and machine learnable generation system may be devices.

A further aspect is a machine learning method and a machine learnable generation method. An embodiment of the methods may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect is a method of making the computer program available for downloading. This aspect is used when the computer program is uploaded into, e.g., Apple's App Store, Google's Play Store, or Microsoft's Windows Store, and when the computer program is available for downloading from such a store.

## EP 3 767 533 B1

## BRIEF DESCRIPTION OF THE DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a machine learnable system,
Figure 1b schematically shows an example of an embodiment of a machine learnable system,
Figure 1c schematically shows an example of an embodiment of a machine learnable data generation system,
Figure 1d schematically shows an example of an embodiment of a machine learnable data generation system,
Figure 2a schematically shows an example of an embodiment of a machine learnable system,
Figure 2b schematically shows an example of an embodiment of a machine learnable system,
Figure 2c schematically shows an example of an embodiment of a machine learnable system,
Figure 2d schematically shows an example of an embodiment of a machine learnable system,
Figure 3a schematically shows an example of an embodiment of a machine learnable data generation system,
Figure 3b schematically shows an example of an embodiment of a machine learnable data generation system,
Figure 4a schematically illustrates diverse samples, clustered using k-means, of an example of a known system,
Figure 4b schematically illustrates diverse samples, clustered using k-means, of an example of an embodiment,
Figure 4c schematically illustrates a prior learnt in an embodiment,
Figure 4d.1 schematically illustrates several groundtruth examples,

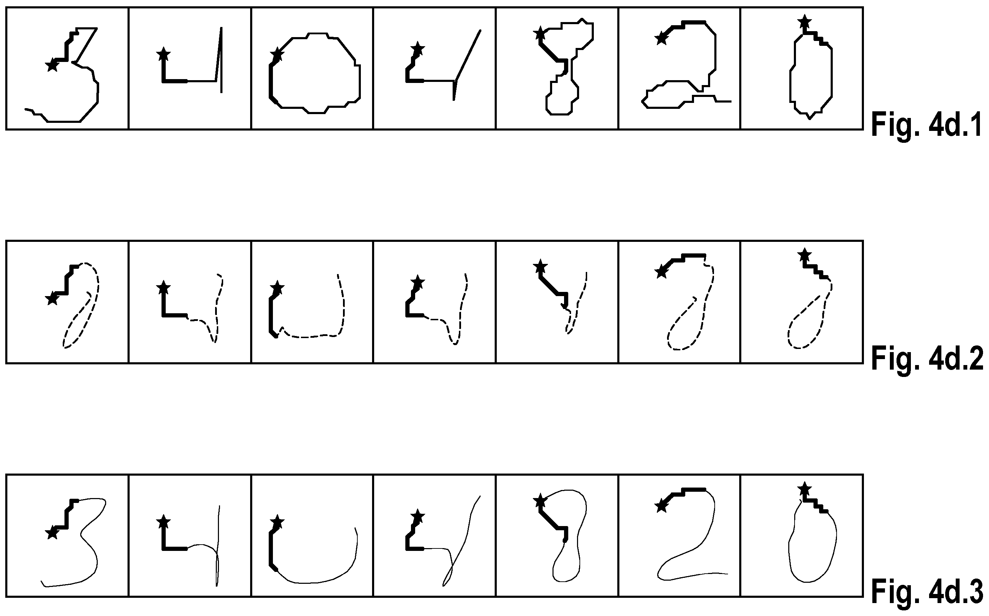

Figure 4d.2 schematically illustrates several completions according to a known model,
Figure 4d.3 schematically illustrates several completions according to an embodiment,

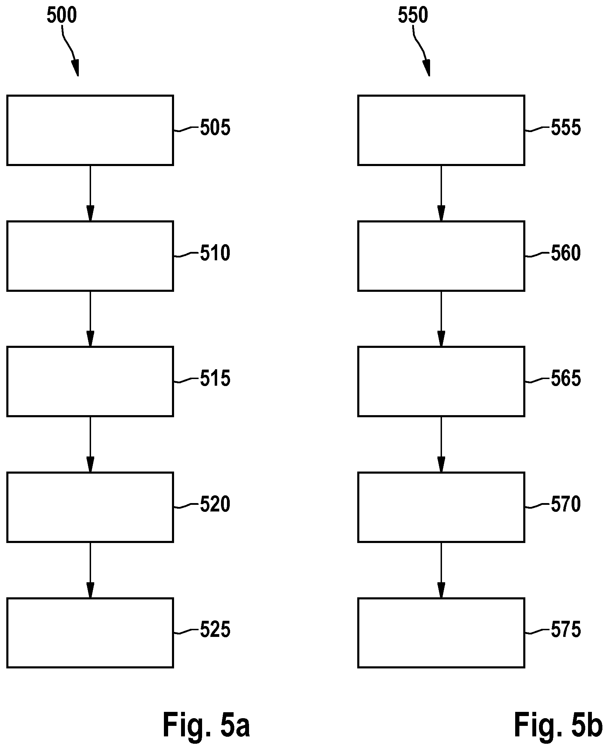

Figure 5a schematically shows an example of an embodiment of a neural network machine learning method,
Figure 5b schematically shows an example of an embodiment of a neural network machine learnable data generation method,

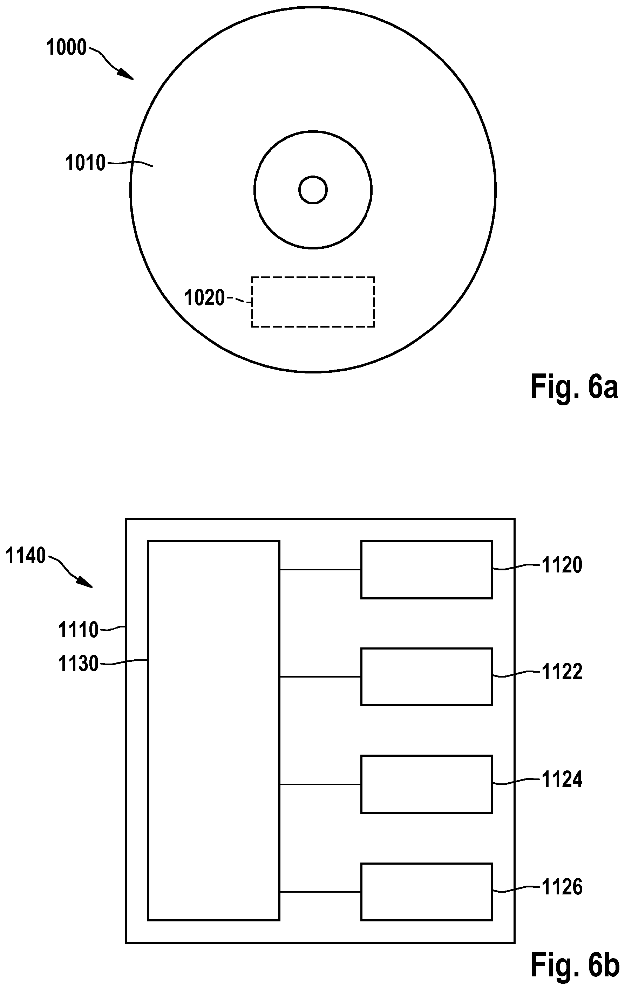

Figure 6a schematically shows a computer readable medium having a writable part comprising a computer program according to an embodiment,
Figure 6b schematically shows a representation of a processor system according to an embodiment.

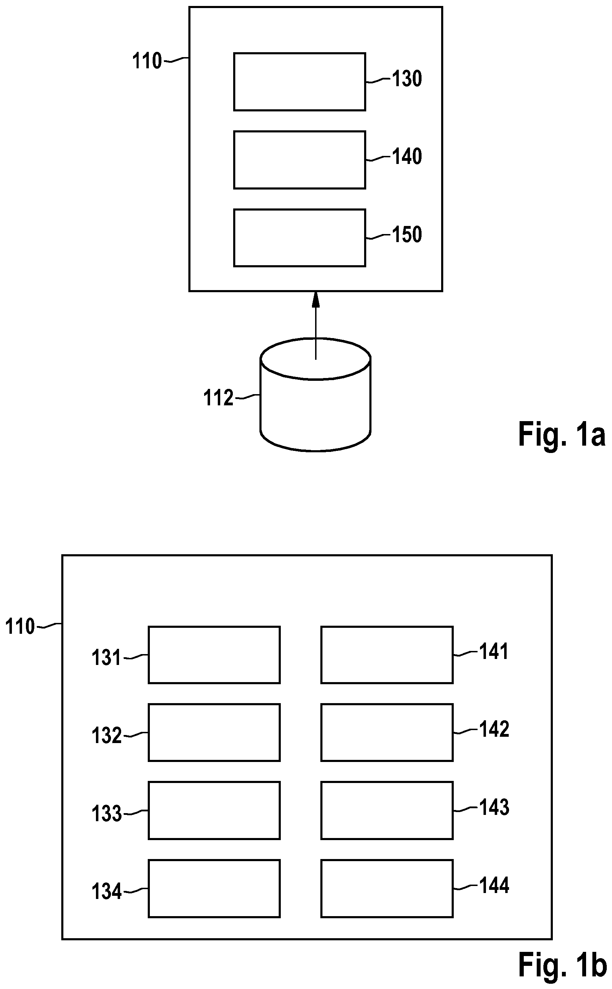

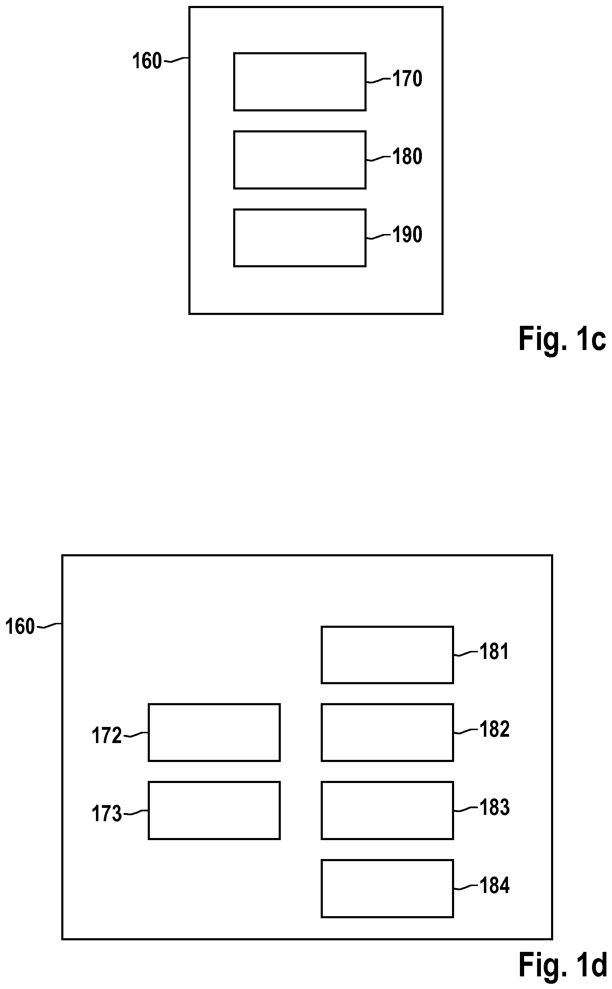

List of Reference Numerals in figures 1-3:

110    a machine learnable system
112    a training data storage
130    a processor system
131    an encoder
132    a decoder
133    a normalizing flow
134    a training unit
140    a memory
141    a target space storage
142    a latent space storage
143    a base space storage
144    a conditional storage
150    a communication interface
160    a machine learnable data generation system
170    a processor system
172    a decoder
173    a normalizing flow
180    a memory
181    a target space storage
182    a latent space storage
183    a base space storage
184    a conditional storage
190    a communication interface
210    target space

211 encoding
220 latent space
221 decoding
222 conditional normalizing flow
230 base space
240 a conditional space

252 training target data
253 training conditional data
254 a random source
255 conditional data
256 generated target data
257 generated target data
262 a machine learnable system
263 a parameter transfer
264 a machine learnable data generation system
272 a machine learnable system
274 a machine learnable data generation system

330 a base space sampler
331 a conditional encoder
340 a normalizing flow
341 a conditional encoder
350 a latent space element
360 a decoding network
361 a target space element
362 a conditional

1000 a computer readable medium
1010 a writable part
1020 a computer program
1110 integrated circuit(s)
1120 a processing unit
1122 a memory
1124 a dedicated integrated circuit
1126 a communication element
1130 an interconnect
1140 a processor system

## DETAILED DESCRIPTION OF EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

Figure 1a schematically shows an example of an embodiment of a machine learnable system 110. Figure 1c schematically shows an example of an embodiment of a machine learnable data generation system 160. For example, the machine learnable system 110 of figure 1a may be used to train the parameters of the machine learnable system, e.g., of neural networks, that may be used in the machine learnable data generation system 160.

Machine learnable system 110 may comprise a processor system 130, a memory 140, and a communication interface 150. Machine learnable system 110 may be configured to communicate with a training data storage 112. Storage 112 may be a local storage of system 110, e.g., a local hard drive or memory. Storage 112 may be non-local storage, e.g., cloud storage. In the latter case, storage 112 may be implemented as a storage interface to the non-local storage.

Machine learnable data generation system 160 may comprise a processor system 170, a memory 180, and a communication interface 190.

Systems 110 and/or 160 may communicate with each other, external storage, input devices, output devices, and/or one or more sensors over a computer network. The computer network may be an internet, an intranet, a LAN, a WLAN, etc. The computer network may be the Internet. The systems comprise a connection interface which is arranged to communicate within the system or outside of the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna, etc.

The execution of system 110 and 160 may be implemented in a processor system, e.g., one or more processor circuits, e.g., microprocessors, examples of which are shown herein. Figures 1b and 1d show functional units that may be functional units of the processor system. For example, figures 1b and 1d may be used as a blueprint of a possible functional organization of the processor system. The processor circuit(s) are not shown separate from the units in these figures For example, the functional units shown in figures 1b and 1d may be wholly or partially implemented in computer instructions that are stored at system 110 and 160, e.g., in an electronic memory of system 110 and 160, and are executable by a microprocessor of system 110 and 160. In hybrid embodiments, functional units are implemented partially in hardware, e.g., as coprocessors, e.g., neural network coprocessors, and partially in software stored and executed on system 110 and 160. Parameters of the network and/or training data may be stored locally at system 110 and 160 or may be stored in cloud storage.

Figure 1b schematically shows an example of an embodiment of machine learnable system 110. Machine learnable system 110 has access to a training storage 112 which may comprise a set of training target data (x). For example, in an embodiment, the machine learnable system is configured to generate a model that can generate data that is similar to the training data, e.g., that appears to be sampled from the same probability distribution from the training data appears to be sampled. For example, the training data may comprise sensor data, e.g., image data, lidar data, etc.

Training storage 112 may also or instead comprise training pairs, a training pair comprising conditioning data ($c$), and a data generation target ($x$). Machine learnable system 110 may be configured to train a model, e.g., comprising multiple neural networks, for the generation of a data generation target based on the conditioning data. For example, in this a conditional probability distribution of the training data is learned instead of an unconditional probability distribution.

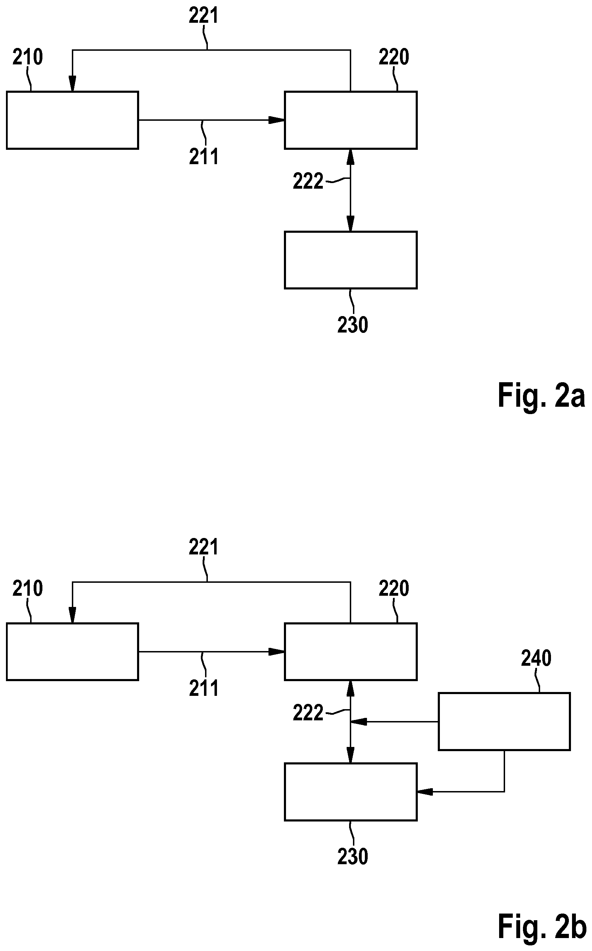

Figure 2a schematically shows an example of data structures in an embodiment of machine learnable system 110. System 110 operates on: target data, e.g., data generation targets, which are collectively referred to as target space 210; latent data, e.g., internal or non-observable data elements, which are collectively referred to as latent space 220; and base points or base data, which are collectively referred to as base space 230. Figure 2b schematically shows an example of data structures in an embodiment of machine learnable system 110. Figure 2b is the same as figure 2a except for a further space 240: conditional space 240 which comprises conditional data.

Conditional data can be useful for data generation, and especially in prediction applications. For example, the conditioning data may be a time of day. The data generation task may then be applied to generation of data for a particular time of day. For example, the condition task may be sensor data from a different modality. The data generation task may then be applied to data generation that fits sensor data of another modality. For example, the training data may comprise image data and lidar data, using one as the data generation target and the other as the conditional, one can translate image data to lidar data and vice versa.

Conditional probabilities may also be used for prediction tasks. For example, the conditional may be past values of a sensor, and the data generation task may be future sensor data. In this way, one can generate data according to the probable distribution of future sensor values. Data processing may be applied to the target and conditional data. For example, the conditional data may encode past trajectories of one or more traffic participants, while the data generation target encodes future trajectories of one or more traffic participants.

The various spaces may typically be implemented as vector spaces. The representations of the target, latent, base or conditional data may be as vectors. Elements of a space are typically referred to as 'point', even though the corresponding data, e.g., vector does not need to refer to a physical point in physical space.

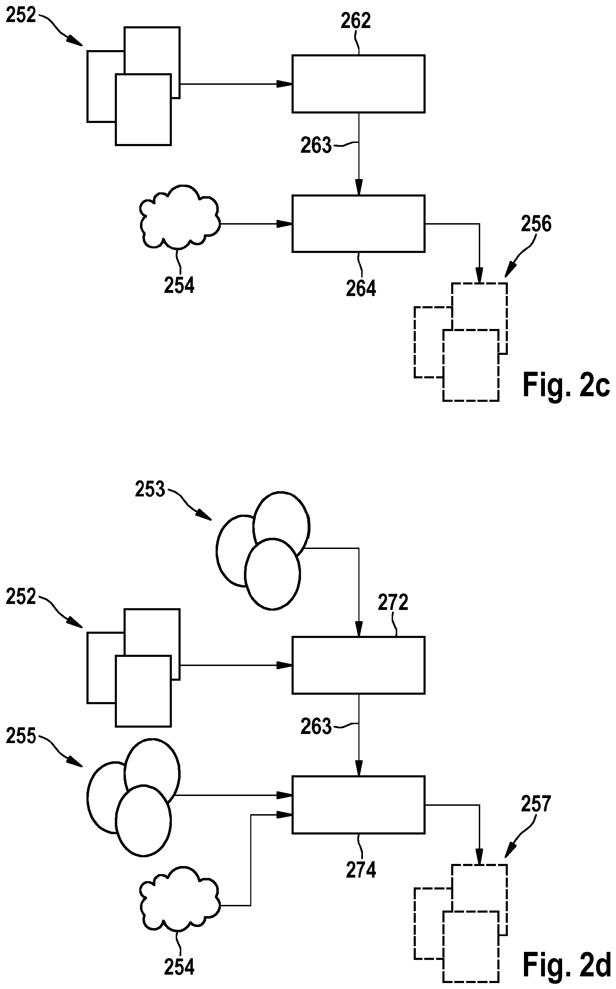

Figure 2c schematically shows an example of an embodiment of a machine learnable system that may be implemented using the data structures of figure 2a. A machine learnable system 262 is shown that is trained using training target data 252. Once training is finished the trained parameters may be transferred, at least in part, in a parameter transfer 263 to a machine learnable data generation system 264. System 262 and 264 could be the same system though. Machine learnable data generation system 264 may be configured to receive input from a random source 254, e.g., to sample points in the base space. Machine learnable data generation system 264 may use the inverse normalizing flow and decoder to produce generated target data 256. Generated target data 256 should appear as if they were drawn from the same distribution as target data 252. For example, data 252 and 256 may both be images. For example, data 252 may be images of traffic participants, such as cyclists and pedestrians, and generated data 256 should be similar images. Data 256 may be used to test or train a further device, e.g., an autonomous vehicle, which should learn to distinguish between traffic participants. Data 256 may also be used to test or debug the further device.

Figure 2d schematically shows an example of an embodiment of a machine learnable system that may be implemented using the data structures of figure 2b. A machine learnable system 272 is shown that is trained using training target data 252 and corresponding conditionals 253. Once training is finished the trained parameters may be transferred, at least in part, in a parameter transfer 263 to a machine learnable data generation system 274. System 272 and 274 could be the same system. Machine learnable data generation system 274 may be configured to receive input from a random source 254, e.g., to sample points in the base space and new conditionals 255. Conditionals 255 may be obtained from sensor, e.g., the same or similar sensors that produced conditionals 253. Machine learnable data generation system 274 may use the inverse conditional normalizing flow and decoder to produce generated target data 257. Generated target data 276 should appear as if they were drawn from the same conditional distribution as target data 252 and conditionals 253. For example, data 252 and 257 may both be images. For example, data 252 may be images of traffic participants, such as cyclists and pedestrians, while conditionals 253 may be time of day information. The conditionals 255 may also be time of day information. Generated data 256 should be similar images as images 252 conditional upon the time of day information in 255. Data 257 may be used similarly as data 256, however the conditionals 255 may be used to generate test data 256 that is specific for a particular condition. For example, images of road participants at a particular time of day, e.g., at night, in the morning, etc. may be produced. Conditionals may also be used for prediction tasks, e.g., trajectory prediction.

System 110 may comprise storage to store elements of the various spaces. For example, system 110 may comprise a target space storage 141, a latent space storage 142, a base space storage 143 and optionally a conditional storage 144 to store one or more elements of the corresponding spaces. The space storages may be part of an electronic storage, e.g., a memory.

System 110 may be configured with an encoder 131 and a decoder 132. For example, encoder 131 implements an encoder function ($ENC$) mapping a data generation target ($x$) in a target space 210, ($X$) to a latent representation ($z = ENC(x)$) in a latent space, 220 ($Z$). Decoder 132 implements a decoder function mapping a latent representation ($z$) in the latent space 220, ($Z$) to a target representation ($x=DEC(z)$) in the target space 210, ($X$). When fully trained, the encoder and decoder functions are ideally close to be being each other's inverse, although this ideal will not typically be fully realized in practice.

The encoder function and decoder functions are stochastic in the sense that they produce parameters of a probability distribution from which the output is sampled. That is, the encoder function and decoder functions are non-deterministic functions in the sense that they may return different results each time they are called, even if called with the same set of input values and even if the definition of the function were to stay the same. Note that the parameters of a probability distribution themselves may be computed deterministically from the input.

For example, the encoder function and decoder function may be arranged to generate parameters defining at least a mean value of a probability distribution. The function output of the encoder function and decoder function are then determined by sampling the defined probability distribution having the generated mean value. Other parameters of the probability distribution may be obtained from a different source.

In particular, it was found to be particularly advantageous if the encoder function does not generate the variance. The mean of the distribution may be learned but the variance may be a predetermined fixed value, e.g., the identity or some multiple of the identity. This does not need to be symmetric between the encoder and decoder, for example, the decoder may learn a mean and a variance, e.g., of a Gaussian distribution whereas the corresponding encoder learns only a mean, but not a variance (which is fixed). The fixed variance in the encoder turns out to improve the learning in experiments by as much as 40% (see experiments below).

In an embodiment, the data generation targets in target space 210 are elements that the model, once trained, may be asked to generate. The distribution of the generation targets may or may not depend on conditional data, referred to as conditionals. The conditionals may collectively be thought of as a conditional space 240.

A generation target or conditional, e.g., an element of target space 210 or conditional space 240 may be low-dimensional, e.g., one or more values, e.g., a speed, one or more coordinates, a temperature, a classification or the like, e.g., organized in a vector. A generation target or conditional may also be high-dimensional, e.g., the output of one or more data-rich sensors, e.g., image sensors, e.g., LIDAR information, etc. Such data may also be organized in a vector. In an embodiment, the elements in space 210 or 240 may themselves be output of an encoding operation. For example, a system, which may be fully or partially external the model described herein, may be used to encode a future and/or past traffic situation. Such an encoding may itself be performed using a neural network, including, e.g., an encoder network.

For example, in an application the outputs of a set of temperature sensors distributed in an engine may be generated, say 10 temperature sensors. The generation target and space 210 may be low-dimension, e.g., 10 dimensional. The conditional may encode information of the past use of the motor, e.g., hours of operation, total amount of energy used, out-side temperature, and so on. The dimension of the conditional may be more than one.

For example, in an application the future trajectory of a traffic participant is generated. The target may be a vector describing the future trajectory. The conditional may encode information of the past trajectory. In this case the dimension of the target and conditional space may both be multi-dimensional. Thus, in an embodiment, the dimension of the target space and/or conditional may be 1 or more than 1, likewise it may be 2 or more, 4 or more, 8 or more, 100 or more, etc.

In an application, the target comprises data of a sensor that gives multi-dimensional information, e.g., a LIDAR, or image sensor. The conditional may also comprises a sensor that gives multi-dimensional information, e.g., a LIDAR, or image sensor, e.g., the other modality. In this application, the system learns to predict LIDAR data based on image data or vice versa. This is useful, e.g., for the generation of training data. For example, to train or test autonomous driving software.

In an embodiment, the encoder and decoder functions form a variational autoencoder. The variational auto-encoder may learn a latent representation z of the data x which is given by an encoding network z = ENC(X). This latent representation z can be reconstructed into the original data space by a decoding network y = DEC(z), where y is the decoded representation of the latent representation z. The encoder and decoder function may be similar to a variational autoencoder except that no fixed prior on the latent space is assumed. Instead, the probability distribution on the latent space is learnt in a normalizing flow or conditional normalizing flow.

Both the encoder function and decoder function may be non-deterministic, in the sense that they produce (typically deterministically) parameters of a probability distribution from which the output is sampled. For example, the encoder function and decoder function may generate a mean and variance of a multivariate Gaussian distribution. Interestingly, at least one of the encoder function and decoder function may be arranged to generate a mean value, a function output is determined by sampling a Gaussian distribution having the mean value and a predetermined variance. That is, the function may be arranged to generate only part of the required parameters of the distribution. In an embodiment, the function generates only the mean of a Gaussian probability distribution but not the variance. The variance may then be a predetermined value, e.g., the identity, e.g., $\tau I$, in which $\tau$ is a hyperparameter. Sampling for the output of the function may be done by sampling a Gaussian distribution having the generated mean and the predetermined variance.

In an embodiment, this is done for the encoder function, but not for the decoder function. For example, the decoder function may generate mean and variance for sampling, while the encoder function only generates mean but uses a predetermined variance for sampling. One could have an encoder function with a fixed variance, but a decoder function with a learnable variable variance.

Using a fixed variance was found to help against latent variable collapse. In particular, a fixed variance in the encoder functions was found to be effective against latent variable collapse.

The encoder and decoder function may comprise a neural network. By training the neural network, the system may learn to encode the information which is relevant in the target space in an internal, latent, representation. Typically, the dimension of the latent space 220 is lower than the dimension of the target space 210.

System 110 comprises a normalizing flow, sometimes just referred to as a flow. The normalizing flow maps a latent representation (z) to a base point in the base space 230 (e). Interestingly, as the encoder maps points of the target space to the latent space, the probability distribution of the points of the target space introduces a probability distribution on the latent space. However, the probability distribution of the latent space may be very complex. Machine learnable system 110 comprises a normalizing flow 133, e.g., normalizing flow unit, to map the elements of the latent space to yet a further space, the base space. The base space is configured to have a probability distribution that either predetermined, or otherwise can be easily computed. Typically, the latent space (Z) and the base space (E) have the same dimension. Preferably, the flow is invertible.

In an embodiment, the normalizing flow is a conditional normalizing flow. The conditional flow also maps from the latent space to the base space, but learns a conditional probability distribution rather than an unconditional probability distribution. The flow is invertible, that is, for a given conditional c, the flow is invertible with respect to basepoint e and latent point z.

Figure 2a shows the encoding operation from target space to latent space as arrow 211; the decoding operation from latent space to target space as arrow 221 and the conditional flow as arrows 222. Note that the flow is invertible, which is indicated with a two-way arrow. Figure 2b shows the conditional space 240, one or both of the flow and the base space may depend on the conditional.

The conditional normalizing flow function is configured to map a latent representation (z) to a base point (e = f(z) or e = f(z, c)) in the base space (E) optionally conditional on conditioning data (c). The normalizing flow function depends on the latent point (z) and on the conditioning data (c). In an embodiment, the flow is a deterministic function.

A normalizing flow may learn the probability distribution of a dataset in the latent space $Z$ by transforming the unknown distribution $p(Z)$ with a parametrized invertible mapping $f_\theta$ to a known probability distribution $p(E)$. The mapping $f_\theta$ is referred to as the normalizing flow; $\theta$ refers to the learnable parameters. The known probability distribution $p(E)$ is typically a multivariate Gaussian distribution, but could be some other distribution, e.g., a uniform distribution.

The probability $p(z)$ of an original datapoint $z$ of $Z$ is $p(e) * J$, wherein $e = f_\theta(z)$, i.e. $p(z) = p(f_\theta(z)) * J_\theta(z)$. $J_\theta(z)$ is the Jacobian determinant of the invertible mapping $f_\theta(z)$ which accounts for the change of probability mass due to the invertible mapping. The $p(e) = p(f_\theta(z))$ is known, since the output $e$ of the invertible mapping $f_\theta(z)$ can be computed and the probability distribution $p(e)$ is by construction known, often a standard multivariate normal distribution is used. Thus it is easy to compute the probability $p(z)$ of a data point z by computing its transformed value e, computing $p(e)$ and multiplying the results with the jacobian determinant $J_\theta(z)$. In an embodiment, the normalizing flow $f_\theta$ also depends on the conditional, making the normalizing a conditional normalizing flow.

One way to implement a normalizing flow is as sequence of multiple invertible sub-functions, referred to as layers. The layers are composed to form the normalizing flow $f_\theta(z)$. For example, in an embodiment, the layers comprise non-linear flows interleaved with mixing layers.

By making the invertible sub-functions depend on a conditional a normalizing flow can be turned into a conditional normalizing flow. In fact, any conventional (non-conditional) normalizing flow could be adapted to be a conditional normalizing flow by replacing one or more of its parameters with the output of a neural network which takes as input the conditional and has as output the parameter of the layer. The neural network may have further inputs, e.g., the latent variable, or the output of the previous layers, or parts thereof, etc. Contrariwise, a conditional normalizing flow can be turned into a non-conditional normalizing flow by removing or fixing the conditional input. The examples below include sub-functions for a conditional normalizing flow, e.g., which can learn a dependency on a conditional; these examples may be modified for an unconditional normalizing flow by removing the 'c' input.

For example, to model the invertible mapping $f_\theta(z)$ one may compose multiple layers, or coupling layers. The Jacobian determinant $J$ of a number of stacked layers is just the product of the Jacobian determinants of the individual layers. Each coupling layer $i$ gets as input the variables $X_{i-1}$ from the previous layer $i$ - 1 (or the input in case of the first layer) and produces transformed variables $X_i$, which comprise the output of layer $i$. Each individual coupling layer $f_{\theta,i}(x_{i-1}) = x_i$ may comprise an affine transformation, the coefficients of which depend at least on the conditional. One way to do this is to split the variables in a left and right part, and set, e.g.,

$$x_{i,right} = scale\big(c, x_{i-1,left}\big) * x_{i-1,right} + offset\big(c, x_{i-1,left}\big)$$

$$x_{i,left} = x_{i-1,left}$$

In these coupling layers the output of layer $i$ is called $x_i$. Each $x_i$ may be composed of a left and right half, e.g., $x_i = [x_{i,left}, x_{i,right}]$. For example, the two halves may be a subset of the vector $x_i$. One half, $x_{i,left}$ may be left unchanged while the other half, $x_{i,right}$ may be modified by an affine transformation, e.g., with a scale and offset, which may depend only on $x_{i,left}$. The left half may have half the coefficients or fewer or more. In this case, because $x_{i,right}$ depends only on elements in $x_{i-1,left}$ but not in $x_{i-1,right}$ the flow can be inversed.

Due to this construction the Jacobian determinant of each coupling layer is just the product of the output of the scaling network $scale_i(c, x_{i-1,left})$. Also, the inverse of this affine transformation is easy to compute which facilitates easy sampling from the learned probability distribution for generative models. By having invertible layers including parameters which are given by a learnable network which depends on a conditional, the flow may learn a complex conditional probability distribution $p(z|c)$ which is highly useful. The output of *scale* and *offset* may be vectors. The multiplication and addition operations may be component wise. There may be two networks for *scale* and *offset* per layer.

In an embodiment, the left and right halves may switch after each layer. Alternatively, a permutation layer may be used, e.g., a random but fixed permutation of the elements of $x_i$. In addition or instead of the permutation and/or affine layers other invertible layers may be used. Using left and right halves helps in making the flow invertible, but other learnable and invertible transformation may be used instead.

The permutation layer may be a reversible permutation of the entries of a vector that is fed through the system. The permutation may be randomly initialized but stay fixed during training and inference. Different permutations for each permutation layer may be used.

In an embodiment, one or more of the affine layers are replaced with a non-linear layer. It was found that non-linear layers are better able to transform the probability distribution on the latent space to a normalized distribution. This is especially true if the probability distribution on the latent space has multiple modes. For example, the following non-linear layer may be used

$$x_{i,right} = offset\big(c, x_{i-1,left}\big) + scale\big(c, x_{i-1,left}\big) * x_{i-1,right}$$

$$+ C(c, x_{i-1,left})/(1 + D(c, x_{i-1,left}) * x_{i-1,right} + G\big(c, x_{i-1,left}\big)^2)$$

$$x_{i,left} = x_{i-1,left}$$

As above, the operations on vectors may be done component wise. The non-linear example above uses neural networks: *offset, scale, C(), D(), and G()*. Each of these networks may depend on the conditional c and the part of the output of the previous layer. The networks may output vectors. Other useful layers include a convolutional layer, e.g., of 1x1 convolutions, e.g., a multiplication with an invertible matrix $M$

$$x_i = Mx_{i-1}$$

The matrix may be the output of a neural network, e.g., the matrix may be $M = M(c)$.

Another useful layer is an activation layer, in which the parameters do not depend on the data, e.g. ,

$$x_i = sx_{i-1} + o$$

An activation layer may also have conditional dependent parameters, e.g.,

$$x_i = s(c)x_{i-1} + o(c)$$

The networks $s()$ and $o()$ may produce a single scalar, or a vector.

Yet another useful layer is a shuffling layer or permutation layer, in which the coefficients are permutated according to a permutation. The permutation may be chosen at random when the layer is first initialized for the model, but remain fixed thereafter. For example, the permutation might not depend on data or training.

In an embodiment, there are multiple layers, e.g., 2, 4, 8, 10, 16 or more. The number may be twice as large if each layer is followed by a permutation layer. The flow maps from the latent space to the base space, or vice versa, as the flow is invertible.

The number of neural networks that is involved in the normalizing flow may be as large as or larger than the number of learnable layers. For example, the affine transformation example given above, may use two layers. In an embodiment, the number of layers in the neural networks may be restricted, e.g., to 1 or 2 hidden layers. In figure 2 the influence of the conditional space 240 on the normalizing flow has been shown with a figure toward flow 222.

For example, in an embodiment, the conditional normalizing flow may comprise multiple layers, of different types. For example, layers of the conditional normalizing flow may be organized in blocks, each block comprising multiple layers. For example, in an embodiment, a block comprises a non-linear layer, a convolutional layer, a scaling activation layer, and a shuffling layer. For example, one may have multiple of such blocks, e.g., 2 or more, 4 or more, 16 or more, etc.

Note that the number of neural network involved in a conditional normalizing flow may be quite high, e.g., more than a 100. Furthermore, the networks may have multiple outputs, e.g., vectors or matrices. Learning of these networks may proceed using maximum likelihood learning, etc.

For example, a non-linear non-conditional normalizing flow may likewise have multiple blocks with multiple layers. For example, such a block may comprise a non-linear layer, an activation layer and a shuffling layer.

Thus, in an embodiment, one may have a vector space 210, *X* of which is *n* dimensional for generation targets, e.g., future trajectories; a latent vector space 220, *Z,* which is *d* dimensional, e.g., for latent representations; a vector space 230, E which may also be *d* dimensional and has a base distribution, e.g., a multivariate Gaussian distribution. Furthermore, an optional vector space 240 may represent conditionals, e.g., past trajectories, environment information, and the like. A normalizing flow 222 runs between spaces 220 and 230 in figure 2a; a conditional normalizing flow 222 runs between spaces 220 and 230 in figure 2b conditioned an element from space 240.

In an embodiment, the base space allows for easy sampling. For example, the base space may be a vector space with a multivariate Gaussian distribution on it, e.g., a $N(0, I)$ distribution. In an embodiment, the probability distribution on the base space is a predetermined probability distribution.

Another option is to make the distribution of the base space also conditional on the conditional, preferably whilst still allowing easy sampling. For example, one or more parameters of the base distribution may be generated by a neural network taking as input at least the conditional, e.g., the distribution may be $N(g(c),I),$ for some neural network $g$. Neural network $g$ may be learnt together with the other networks in the model. For example, the neural network $g$ may compute a value, e.g., a mean, with which a fixed distribution is shifted, e.g., added to it. For example, if the base distribution is Gaussian, conditional base distribution may be $N(g(c), I)$, e.g., $g(c) + N(0, I)$. For example, if the distribution is uniform, e.g., on an interval such as the [0,1] interval, then the conditional distribution may be $[g(c),g(c) + 1]$, or $\left[g(c) - \frac{1}{2}, g(c) + \frac{1}{2}\right]$ to keep the mean equal to $g(c)$.

System 110 may comprise a training unit 134. For example, training unit 134 may be configured to train the encoder function, decoder function and normalizing flow on the set of training pairs. For example, the training may attempt to minimize a reconstruction loss of the concatenation of the encoder function and the decoder function, and to minimize a difference between a probability distribution on the base space and the concatenation of encoder and the normalizing flow function applied to the set of training pairs.

The training may follow the following steps (in this case to produce generated sensor data of traffic participants, e.g., for training or testing purposes).

1. Encode the sensor data from the training sample using the encoder model. For example, this function may map the sensor data from the target space X to a distribution in the latent space Z
2. Sample a point in the latent space Z from the predicted mean of the encoder and from the given fixed variance
3. Decode the sampled point using the decoder. This is from the latent space Z back to the target space X.
4. Compute the ELBO

    a. Use the sensor data to compute the likelihood under the flow prior
    b. Use the decoded sensor data to compute the data likelihood loss.

5. Make a gradient descent step to maximize the ELBO.

The above example, does not use a conditional. Another example, follow the following steps (in this case to generate future trajectories, possibly in dependence on a conditional):

1. Encode the future trajectory from the training sample using the encoder model. For example, this function may map the future trajectory from the target space X to a distribution in the latent space Z
2. Sample a point in the latent space Z from the predicted mean of the encoder and from the given fixed variance
3. Decode the future trajectory using the decoder. This is from the latent space Z back to the target space X.
4. Compute the ELBO

    a. Use the future trajectory to compute the likelihood under the flow prior; The flow also depends on the conditional corresponding to the future trajectory.
    b. Use the decoded trajectory to compute the data likelihood loss.

5. Make a gradient descent step to maximize the ELBO.

A training may also include a step
0. Encode a condition from a training pair using the condition encoder. This function may compute the mean used for the (optional) conditional base distribution in the base space. The encoding may also be used for the conditional normalizing flow.
For example, this training may comprise maximizing an evidence lower bound, the ELBO. The ELBO may be a lower bound on the probability $p(x)$ or the conditional probability $p(x|c)$ of a training target $x$ given a conditioning data $c$. For example, the ELBO may be defined in an embodiment as

$$p(x|c) >= Expectation_{z \sim q} \; log(p(x|z,c)) - KL(q(z|x,c)||p(z|c))$$

wherein, $KL(q(z|x, c)||p(z|c))$ is the Kullback-Leibler divergence of the probability distributions $q(z|x,c)$ and $p(z|c)$, the probability distributions $p(z|c)$ being defined by the base distribution and the conditional normalizing flow. Using conditional normalizing flow for this purpose transforms $p(z|c)$ into an easier to evaluate probability distribution, e.g., a standard normal distribution. The normalizing flow can represent a much richer class of distributions than the standard prior on the latent space.
When using a normalizing flow to convert the base distribution to a more complex prior for the latent space, the formula for the KL part of the ELBO may be as follows:

$$KL(q(z|x,c)||p(z|c)) = -Entropy(q(z|x,c)) - \int q(z|x,c) * log(p(NF(z|c)) * J(z|c))dz$$

wherein $NF$ is the conditional normalizing flow and $J(z|c)$ the Jacobian of the conditional normalizing flow. By using this complex flow based conditional prior, the autoencoder can learn complex conditional probability distributions more easily since it is not restricted by the simple Gaussian prior assumption on the latent space. The above formula's may be adapted to the unconditional situation, e.g., by omitting the dependency on the conditional.
In an embodiment, the encoder function, decoder function and normalizing flow are trained together. Batching or partial batching of the training work may be used.
Figure 1d schematically shows an example of an embodiment of a machine learnable generation system 160. Machine learnable generation system 160 is similar to system 110, but does not need to be configured for training. For example, this means that system 160 may not need an encoder 131 or access to training storage 112 or a training unit. On the other hand, system 160 may include sensors and/or a sensor interface for receiving sensor data, e.g., to construct a conditional. For example, system 160 may comprise a decoder 172 and a normalizing flow 173. Normalizing flow 173 may be configured for the inverse direction, from base space to latent space. Normalizing flow 173 may be a conditional normalizing flow. Like system 110, also system 160 may comprise storage for the various types of points, e.g., in the form of a target space storage 181, a latent space storage 182, a base space storage 183, and an optional conditional storage 184 to store one or more element of the corresponding spaces. The space storages may be part of an electronic storage, e.g., a memory.

The decoder 172 and flow 173 may be trained by a system such as system 110. For example, system 160 may be configured to determine a generation target ($x$) in the target space for a given conditional ($c$) by

- obtaining a base point ($e$) in a base space, e.g., by sampling the base space, e.g., using a sampler.

- applying the inverse conditional normalizing flow function to the base point ($e$) conditional on the conditional data ($c$) to obtain a latent representation ($z$), and

- applying the decoder function to the latent representation ($z$) to obtain the generation target ($x$).

The use of a conditional may be omitted. Note that decoder 172 may output a mean and variance instead of directly a target. In case of mean and variance to obtain a target one has to sample from this defined probability distribution, e.g., a Gaussian.

Each time, a base point ($e$) is obtained in the base space, a corresponding target generation may be obtained. In this way, one may assemble a set of multiple generation targets. There are several ways to use generation targets. For example, given a generation target a control signal may be computed, e.g., for an autonomous device, e.g., an autonomous vehicle. For example, the control signal may be to avoid a traffic participant, e.g., in all generated futures.

Multiple generation targets may be processed statistically, e.g., they may be averaged, or a top 10% generation may be made, etc.

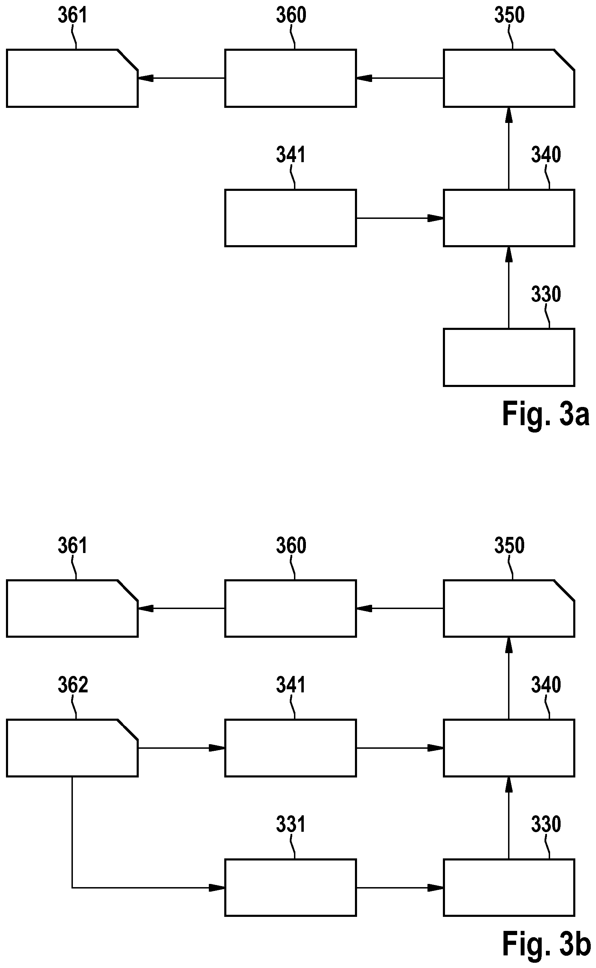

Figure 3a schematically shows an example of an embodiment of a machine learnable generation system. Figure 3a illustrates the processing that may be done in an embodiment for generation.

A base space sampler 330, samples from the base distribution. Using sampled base point from sampler 330, the base point is mapped by normalizing flow 340 to a point in the latent space element 350. The parameters of the normalizing flow may be generated by one or more networks 341. Latent space element 350 is mapped to a target space element 361 by decoding network 360; this may also involve a sampling. In an embodiment, decoding network 360 may comprise a neural network.

Figure 3b schematically shows an example of an embodiment of a machine learnable generation system. Figure 3b illustrates the processing that may be done in an embodiment for generation.

Figure 3b shows a conditional 362, e.g., past sensor information from which future sensor information is to be generated. Conditional 362 may be input to a conditional encoder 341. Conditional encoder 341 may comprise one or more neural networks to generate parameters for the layers in the conditional flow. There may be further inputs to conditional encoder 341, e.g., the base point and intermediate points of the conditional normalizing flow. The networks in encoder 341 may be deterministic, but they may also output probability distribution parameters and use a sampling step.

Conditional 362 may be input to a conditional encoder 331. Conditional encoder 331 may comprise a neural network to generate parameters for a probability distribution from which a base point may be sampled. In an embodiment, conditional encoder 331 generates a mean, the base point being sampled with the mean and a fixed variance. Conditional encoder 331 is optional. Base sampler 360 may use an unconditional predetermined probability distribution.

A base space sampler 330, samples from the base distribution. This may use the parameters generated by encoder 331. The base distribution may instead be fixed. Conditional encoder 331 is optional.

Using the parameters for the layers from encoder 341, and the sampled base point from sampler 330, the base point is mapped by normalizing flow 340 to a point in the latent space element 350. Latent space element 350 is mapped to a target space element 361 by decoding network 360; this may also involve a sampling.

In an embodiment, decoding network 360, conditional encoder 331 and conditional encoder 341 may comprise a neural network. Conditional encoder 341 may comprise multiple neural networks.

Similar processing as shown in figure 3a or 3b for the application phase may be done during the training phase, there may be an additional mapping from the target space to the latent space using an encoder network.

One example application of learning a conditional probability distribution, is predicting the future position x of a traffic participant. For example, one may sample from the conditional probability distribution $p(x|f,t)$. This allows sampling most likely future traffic participant positions x given their features f and the future time t. A car can then drive to a location where no location sample x was generated since this location is most likely free of other traffic participants.

In an embodiment, the conditioning data ($c$), e.g., in a training pair or during application, comprises past trajectory information of a traffic participant, and wherein the generation target ($x$) comprises future trajectory information of the traffic participant.

Encoding the past trajectory information may be done as follows. Past trajectory information, e.g., past trajectory information may be encoded into a first fixed length vector using a neural network, e.g., a recurrent neural network such as an LSTM. Environmental map information may be encoded into a second fixed length vector using a CNN. The interacting traffic participants information, e.g., interacting traffic participants information may be encoded into a third fixed length vector. One or more of the first, second, and/or third vectors may be concatenated into the conditional. Interestingly, the neural networks to encode conditionals may also be trained together with system 110. Encoding conditionals may also be part of the networks that encode the parameters of the flow and/or of the base distribution. The networks to encode conditional information, in this case past trajectories and environment information may be trained together with the rest of the networks used in the model; they may even share part of their network with other networks, e.g., the networks that encode a conditional, e.g., for the base distribution or the conditional flow, may share part of the network body with each other.

The trained neural network device may be applied in an autonomous device controller. For example, the conditional data of the neural network may comprise sensor data of the autonomous device. The target data may be a future aspect of the system, e.g., a generated sensor output. The autonomous device may perform movement at least in part autonomously, e.g., modifying the movement in dependence on the environment of the device, without a user specifying said modification. For example, the device may be a computer-controlled machine, like a car, a robot, a vehicle, a domestic appliance, a power tool, a manufacturing machine, etc. For example, the neural network may be configured to classify objects in the sensor data. The autonomous device may be configured for decision-making depending on the classification. For example, if the network may classify objects in the surrounding of the device and may stop, or decelerate, or steer or otherwise modify the movement of the device, e.g., if other traffic is classified in the neighborhood of the device, e.g., a person, cyclist, a car, etc.

In the various embodiments of system 110 and 160, the communication interfaces may be selected from various alternatives. For example, the interface may be a network interface to a local or wide area network, e.g., the Internet, a storage interface to an internal or external data storage, a keyboard, an application interface (API), etc.

The systems 110 and 160 may have a user interface, which may include well-known elements such as one or more buttons, a keyboard, display, touch screen, etc. The user interface may be arranged for accommodating user interaction for configuring the systems, training the networks on a training set, or applying the system to new sensor data, etc.

Storage may be implemented as an electronic memory, say a flash memory, or magnetic memory, say hard disk or the like. Storage may comprise multiple discrete memories together making up storage 140, 180. Storage may comprise a temporary memory, say a RAM. The storage may be cloud storage.

System 110 may be implemented in a single device. System 160 may be implemented in a single device. Typically, the system 110 and 160 each comprise a microprocessor which executes appropriate software stored at the system; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, systems 110 and 160 may comprise circuits for the evaluation of neural networks.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Below several further optional refinements, details, and embodiments are illustrated. The notation below differs slightly from above, in that a conditional is indicated with *'x',* an element of the latent space with *'z'* and an element of the target space with *'y'*.

Conditional priors may be learned through the use of conditional normalizing flows. A conditional normalizing flow based prior may start with a simple base distribution $p(\varepsilon|x)$, which may then be transformed by *n* layers of invertible normalizing flows $f_i$ to a more complex prior distribution on the latent variables $p(z|x)$,

$$\epsilon|\mathrm{x} \overset{f_1}{\longleftrightarrow} \mathrm{h}_1|\mathrm{x} \overset{f_2}{\longleftrightarrow} \mathrm{h}_2|\mathrm{x} \cdots \overset{f_n}{\longleftrightarrow} \mathrm{z}|\mathrm{x}. \tag{2}$$

Given the base density $p(\varepsilon|x)$ and the Jacobian $J_i$ of each layer *i* of the tranformation, the log-likelihood of the latent variable *z* can be expressed using the change of variables formula,

$$\log(p(\mathrm{z}|\mathrm{x})) = \log(p(\epsilon|\mathrm{x})) + \sum_{i=1}^{n} \log(|\det J_i|). \tag{3}$$

One option is to consider a spherical Gaussians as base distribution, $p(\varepsilon|\mathrm{x}) = \mathcal{N}(0, I)$. This allows for easy sampling from the base distribution and thus the conditional prior. To enable the learning of complex multi-modal priors $p(\mathrm{z}|\mathrm{x})$, one may apply multiple layers of non-linear flow on top of the base distribution. It was found that a non-linear conditional normalizing flows allow the conditional priors $p(\mathrm{z}|\mathrm{x})$ to be highly multimodal. Non-linear conditional flows also allow for complex conditioning on past trajectories and environmental information.

The KL divergence term for training may not have a simple closed form expression for a conditional flow based prior. However, the KL divergence may be computed, by evaluating the likelihood over the base distribution instead of the complex conditional prior. For example, one may use:

$$
\begin{aligned}
-D_{\mathrm{KL}}(q_\phi(\mathrm{z}|\mathrm{x},\mathrm{y})||p_\psi(\mathrm{z}|\mathrm{x})) &= -\mathbb{E}_{q_\phi(\mathrm{z}|\mathrm{x},\mathrm{y})}\log(q_\phi(\mathrm{z}|\mathrm{x},\mathrm{y})) + \mathbb{E}_{q_\phi(\mathrm{z}|\mathrm{x},\mathrm{y})}\log(p_\psi(\mathrm{z}|\mathrm{x})) \\
&= h(q_\phi) + \mathbb{E}_{q_\phi(\mathrm{z}|\mathrm{x},\mathrm{y})}\log(p(\epsilon|\mathrm{x})) + \sum_{i=1}^{n} \log(|\det J_i|).
\end{aligned}
\tag{4}
$$

where, $h(q_\phi)$ is the entropy of the variational distribution. Therefore, the ELBO can be expressed as,

$$\log(p_\theta(\mathrm{y}|\mathrm{x})) \geq \mathbb{E}_{q_\phi(\mathrm{z}|\mathrm{x},\mathrm{y})}p_\theta(\mathrm{y}|\mathrm{z},\mathrm{x}) + h(q_\phi) + \mathbb{E}_{q_\phi(\mathrm{z}|\mathrm{x},\mathrm{y})}\log(p(\epsilon|\mathrm{x})) +$$

$$\sum_{i=1}^{n} \log(|\det J_i|) \tag{5}$$

To learn complex conditional priors, both the volitional distribution $q_\phi(\mathrm{z}|\mathrm{x},\mathrm{y})$ and the conditional prior $p_\psi(\mathrm{z}|\mathrm{x})$ in (5) may be jointly optimized. The variational distribution tries to match the conditional prior and the conditional prior tries to match the variational distribution so that the ELBO (5) is maximized and the data is well explained. This model will be referred to herein as a *Conditional Flow-VAE* (or CF-VAE).

In an embodiment, the variance of $q_\phi(\mathrm{z}|\mathrm{x},\mathrm{y})$ may be fixed to C. This results in a weaker inference model but the entropy term becomes constant and no longer needs to be optimized. In detail, one may use

$$q_\phi(\mathrm{z}|\mathrm{x},\mathrm{y}) = \mathcal{N}(\phi(\mathrm{x},\mathrm{y}), \mathrm{C}) \tag{6}$$

Moreover, the maximum possible amount of contraction also becomes bounded, thus upper bounding the log-Jacobian. Therefore, during training this encourages the model to concentrate on explaining the data and prevents degenerate solutions where either the entropy or the log-Jacobian terms dominate over the data log-likelihood, leading to more stable training and preventing latent variable collapse of the *Conditional Flow -VAE*.

In an embodiment, the decoder function may be conditioned on the condition. This allows the model to more easily learn a valid decoding function. However, in an embodiment, the conditioning of the decoder on the condition x is removed. This is possible due to the fact that a conditional prior is learnt - the latent prior distribution $p(\varepsilon|\mathrm{x})$ can encode information specific to x - unlike the standard CVAE which uses a data independent prior. This ensures that the latent variable z encodes information about the future trajectory and prevents collapse. In particular, this prevents the situation in which the model might ignore the minor modes and model only the main mode of the conditional distribution.

In a first example application, the model is applied to trajectory generation. The past trajectory information may be encoded using a LSTM to a fixed length vector $x_t$. For efficiency, the conditional encoder may be shared between the conditional flow and the decoder. A CNN may be used to encode the environmental map information to a fixed length vector $x_m$. The CVAE decoder may be conditioned with this information. To encode information of interacting traffic participants/agents, one may use the convolutional social pooling of "Semi-conditional normalizing flows for semi-supervised learning" by A. Atanov, et al. For example, one may exchange the LSTM trajectory encoder with $1 \times 1$ convolutions for efficiency. In detail, the convolutional social pooling may pool information using a grid overlayed on the environment. This grid may be represented using a tensor, where the past trajectory information of traffic participants are aggregated into the tensor indexed corresponding to the grid in the environment. The past trajectory information may be encoded using a LSTM before being aggregated into the grid tensor. For computational efficiency, one may directly aggregate the trajectory information into the tensor, followed by a $1 \times 1$ convolution to extract trajectory specific features. Finally, several layers of $k \times k$ convolutions may be applied, e.g., to capture interaction aware contextual features $x_p$ of traffic participants in the scene.

As mentioned earlier, the conditional flow architecture may comprise several layers of flows $f_j$ with dimension shuffle in between. The conditional contextual information may be aggregated into a single vector $x = \{x_t, x_m, x_t\}$. This vector may be used for conditioning at one or more or every layer to model the conditional distribution $p(\mathrm{y}|\mathrm{x})$.

A further example is illustrated with the MNIST Sequence dataset, which comprises sequences of handwriting strokes of the MNIST digits. For evaluation the complete stroke given the first ten steps are generated. This dataset is interesting as the distribution of stroke completions is highly multimodal and number of modes varies considerably. Given the initial stroke of 2, the completions 2, 3, 8 are likely. On the other hand, given the initial stroke of 1, the only likely completion is 1 itself. The data dependent conditional flow based prior performed very well on this dataset.

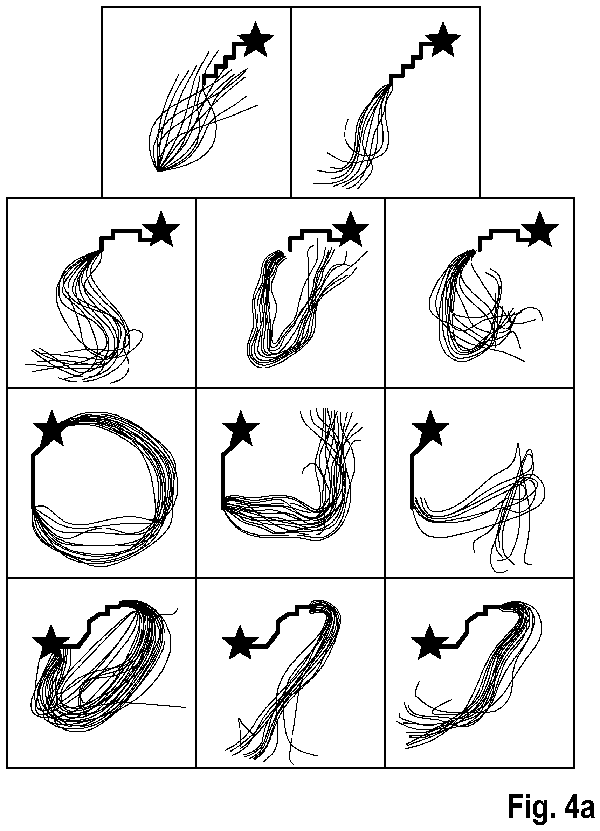

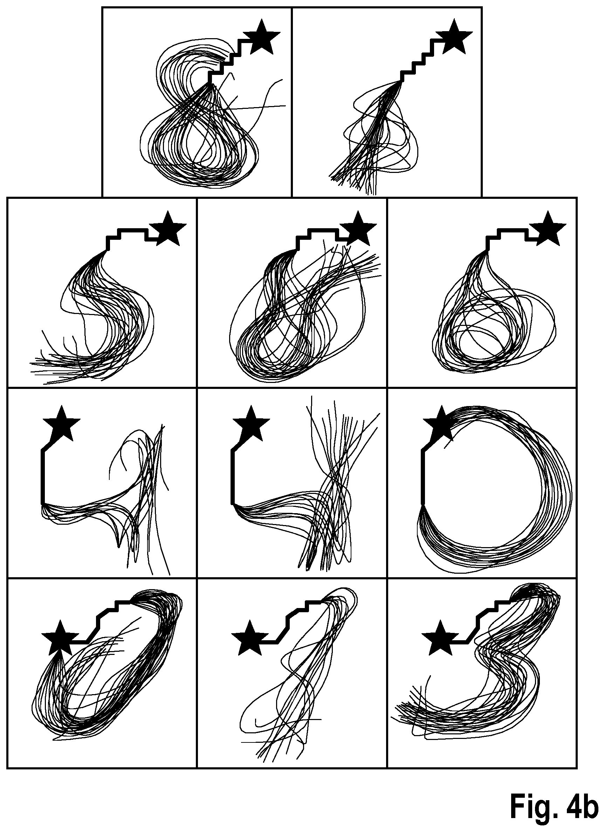

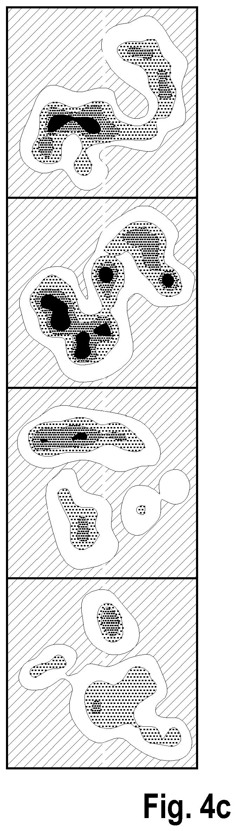

Figures 4a and 4b show diverse samples, clustered using k-means. The number of clusters is set manually to the number of expected digits based on the initial stroke. Figure 4a uses a known model, BMS-CVAE, while figure 4b uses an embodiment. Figure 4c shows the prior learnt in the embodiment.

The table below compares two embodiments (starting with CF), with known methods. The evaluation is done on MNIST Sequences and gives the negative CLL score: lower is better.

| Method | -CLL |
|---|---|
| CVAE | 96.4 |
| BMS-CVAE | 95.6 |
| CF-VAE | **74.9** |
| CF-VAE - *CNLSq layers* | 77.2 |

The tables above used a CF-VAE with a fixed variance variational posterior $q_\phi(z|x,y)$ and a CF-VAE wherein the conditional flow (CNLSq) used affine coupling based flows. The Conditional log-likelihood (CLL) metric was used for evaluation and the same model architecture was used across all baselines The LSTM encoders/decoders had 48 hidden neurons and the latent space was 64 dimensional. The CVAE used a standard Gaussian prior. The CF-VAE outperforms the known models with a performance advantage of over 20%.

Figure 4c illustrates the modes captured and the learnt conditional flow based priors. To enable visualization, the density of the conditional flow based prior was projected to 2D using TSNE followed by a kernel density estimate. One can see that the number of modes in the conditional flow based prior $p_\psi(z|x)$ reflects the number of modes in the data distibution $p(y|x)$. In contrast, the BMS-CVAE is unable to fully capture all modes - its generations are pushed to the mean of the distribution due to the standard Gaussian prior. This highlights the advantages of a data-dependent flow based prior to capture the highly multi-modal distribution of handwriting strokes.

Next, it was found that if one does not fix the variance of the conditional posterior $q_\phi(z|x,y)$, e.g., in the encoder, there is a 40% drop in performance. This is because either the entropy or log-Jacobian term dominates during optimization. It was also found that using an affine conditional flow based prior leads to a drop in performance (77.2 vs 74.9 CLL). This illustrates the advantage of non-linear conditional flows in learning highly non-linear priors.

Figure 4d.1 schematically illustrates several examples from the MNIST Sequence dataset. These are the groundtruth data. The bold part of the data, starting with a star is the data which is to be completed. Figure 4d.2 shows a completing according to the BMS-CVAE model. Figure 4d.3 shows a completing according to an embodiment. It can be seen that the completions according to figure 4d.3 follow the groundtruth much close that those of figure 4d.2.

A further example is illustrated with the Stanford Drone dataset, which comprises trajectories of traffic participant e.g., pedestrians, bicyclists, cars in videos captured from a drone. The scenes are dense in traffic participants and the layouts contain many intersections which leads to highly multi-model traffic participant trajectories. Evaluation uses 5-fold cross validation and a single standard train-test split. The table below shows the results for an embodiment compared to a number of known methods.

| Method | mADE | mFDE |
|---|---|---|
| SocialGAN [14] | 27.2 | 41.4 |
| MATF GAN [37] | 22.5 | 33.5 |
| SoPhie [28] | 16.2 | 29.3 |
| Goal Generation [7] | 15.7 | 28.1 |
| CF-VAE | **12.6** | **22.3** |

A CNN encoder was used to extract visual features from the last observed RGB image of the scene. These visual features serve as additional conditioning ($x_m$) to the conditional normalizing flow. The CF-VAE model with RGB input performs best - outperforming the state-of-art by over 20% (Euclidean distance @ 4sec). The Conditional Flows are able to utilize visual scene information to fine-tune the learnt conditional priors.

A further example is illustrated with the HighD dataset which comprises vehicle trajectories recorded using a drone over highways. The HighD dataset is challenging because only 10% of the vehicle trajectories contain a lane change or interaction - there is a single main mode along with several minor modes. Therefore, approaches which predict a single mean future trajectory, e.g., targeting the main mode, are challenging to outperform. For example, a simple Feed Forward (FF) model performs well. This dataset is made more challenging since VAE based models frequently suffer from posterior collapse when a single mode dominates. VAE based models trade-off the cost of ignoring the minor modes by collapsing the posterior latent distribution to the standard Gaussian prior. Experiments confirmed that predictions by known systems, such as CVAE, are typically linear continuations of the trajectories; that is they show collapse to a main mode. However, predicted trajectories according to an embodiment are much more diverse and cover events like lane changes; that they include minor modes.

The CF-VAE significantly outperforms known models, demonstrating that posterior collapse did not occur. To further counter posterior collapse the additional conditioning of the past trajectory information on the decoder was removed. Furthermore, the addition of contextual information of interacting traffic participants further improves performance. The Conditional CNLSq Flows can effectively capture complex conditional distributions and learn complex data dependent priors.

Figure 5a schematically shows an example of an embodiment of a neural network machine learning method 500. Method 500 may be computer implemented and comprises

- accessing (505) set of training pairs, a training pair comprising conditioning data ($c$), and a generation target ($x$); for example, from an electronic storage.
- mapping (510) a generation target ($x$) in a target space ($X$) to a latent representation ($z = ENC(x)$) in a latent space ($Z$) with an encoder function,
- mapping (515) a latent representation ($z$) in the latent space ($Z$) to a target representation ($x = DEC(z)$) in the target space *(X)* with a decoder function,
- mapping (520) a latent representation ($z$) to a base point ($e = f(z, c)$) in a base space ($E$) conditional on conditioning data ($c$) with a conditional normalizing flow function, the encoder function, decoder function and conditional normalizing flow function being machine learnable functions, the conditional normalizing flow function being invertible; for example, then encoder, decoder and conditional flow function may comprise neural networks,
- training (525) the encoder function, decoder function and conditional normalizing flow on the set of training pairs, the training comprising minimizing a reconstruction loss of the concatenation of the encoder function and the decoder function, and to minimize a difference between a probability distribution on the base space and the concatenation of encoder and the conditional normalizing flow function applied to the set of training pairs.

Figure 5b schematically shows an example of an embodiment of a neural network machine learnable generation method 550. Method 550 may be computer implemented and comprises

- obtaining (555) conditional data (c),
- determining (560) a generation target by

  - obtaining (565) a base point (e) in a base space,

- mapping (570) the base point to a latent representation conditional on the conditional data ($c$) using an inverse conditional normalizing flow function mapping the base point ($e$) to a latent representation in the latent space ($Z$), ($z = f^{-1}(z, c)$), conditional on conditioning data ($c$), and
- mapping (575) latent representation to obtain the generation target using a decoder function mapping the latent representation ($z$) in the latent space ($Z$) to a target representation ($x = DEC(z)$) in the target space ($X$). The decoder function and conditional normalizing flow function may have been learned according to a machine learnable system as set out herein.

For example, the machine learning method the machine learnable generation method may be computer implemented methods. For example, accessing training data, and/or receiving input data may be done using a communication interface, e.g., an electronic interface, a network interface, a memory interface, etc. For example, storing or retrieving parameters may be done from an electronic storage, e.g., a memory, a hard drive, etc., e.g., parameters of the networks. For example, applying a neural network to data of the training data, and/or adjusting the stored parameters to train the network may be done using an electronic computing device, e.g., a computer. The encoder and decoder can also output mean and/or variance, instead of directly the output. In case of mean and variance to obtain the output one has to sample from this defined Gaussian.

The neural networks, either during training and/or during applying may have multiple layers, which may include, e.g., convolutional layers and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 500 and/or 550 Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

**Figure 6a** shows a computer readable medium 1000 having a writable part 1010 comprising a computer program 1020, the computer program 1020 comprising instructions for causing a processor system to perform a machine learning method and/or a machine learnable generation method, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of training and/or applying the machine learnable model, e.g., including training or applying one or more a neural networks.

**Figure 6b** shows in a schematic representation of a processor system 1140 according to an embodiment of a machine learning system and/or a machine learnable generation system. The processor system comprises one or more integrated circuits 1110. The architecture of the one or more integrated circuits 1110 is schematically shown in Figure 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the training and/or application device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims, references in parentheses refer to reference signs in drawings of exemplifying embodiments or to formulas of embodiments, thus increasing the intelligibility of the claim. These references shall not be construed as limiting the claim.

## Claims

1.  A machine learnable system (110) for training a decoder function, an encoder function and a normalizing flow function for use with a sensor data generation system, wherein the normalizing flow is a non-linear conditional normalizing flow function mapping a latent representation ($z$) to a base point ($e$ - $f(z)$; $e$ - $f(z, c)$) in a base space ($E$) conditional on conditioning data ($c$), the system comprising

    - a training storage (112) comprising a set of training target data ($x$), the target data comprising sensor data, the sensor data comprising image data or lidar data,
    - a processor system (130) configured for
    - an encoder function mapping a target data *(x)* in a target space *(X)* to a latent representation *(z = ENC(x))* in a latent space (Z),
    - a decoder function mapping a latent representation ($z$) in the latent space ($Z$) to a target data representation *(x = DEC(z))* in the target space *(X),* wherein the encoder function and decoder function are arranged to generate parameters defining at least a mean value of a probability distribution, a function output of the encoder function and decoder function being determined by sampling the defined probability distribution having the generated mean value, wherein the probability distributions defined by the encoder function have a predetermined variance,
    - a normalizing flow function mapping a latent representation ($z$) to a base point ($e$ = $f(z)$) in a base space ($E$), the base space having a predetermined probability distribution, the encoder function, decoder function and normalizing flow function being machine learnable functions, the normalizing flow function being invertible, the processor system being further configured to
    - train the encoder function, decoder function and normalizing flow on the set of training target data, the training comprising minimizing a reconstruction loss of the concatenation of the encoder function and the decoder function, and to minimize a difference between the predetermined probability distribution on the base space and the concatenation of encoder and the normalizing flow function applied to the set of training target data.

2.  A machine learnable system (110) as in any one of the preceding claims, wherein the encoder function and decoder functions define a Gaussian probability distribution.

3.  A machine learnable system (110) as in any one of the preceding claims, wherein the decoder function generates a mean and variance, said mean and variance being learnable parameters.

4.  A machine learnable system (110) as in any one of the preceding claims, wherein the training comprises maximizing an evidence lower bound (ELBO) being a lower bound on the probability (p(x)) of a training target data (x), the ELBO being defined as

$$p(x) \; >= \; Expectation_{z \sim q} \; log(p(x|z)) - KL(q(z|x) \| p(z))$$

wherein, $KL(q(z|x) \| p(z))$ is the Kullback-Leibler divergence of the probability distributions $q(z|x)$ and p(z), the probability distributions $p(z)$ being defined by the base distribution and the normalizing flow.

5.  A machine learnable system (110) as in Claim 1, wherein

    - conditioning data (c) in a training pair comprises past trajectory information of a traffic participant, and wherein the generation target (x) comprises future trajectory information of the traffic participant, or
    - conditioning data (c) in a training pair comprises sensor information and wherein the generation target (x) comprises a classification.

6. A machine learnable system (110) as in any one of the preceding claims, wherein the conditional normalizing flow function comprises a sequence of multiple invertible normalizing flow sub-functions, one or more parameters of the multiple invertible normalizing flow sub-functions being generated by a neural network (e.g.,

$$x_{i,right} = scale(x_{i-1,left}) * x_{i-1,right} + offset(x_{i-1,left});$$

$$x_{i,right} = offset(x_{i-1,left}) + scale(x_{i-1,left}) * x_{i-1,right} + C(x_{i-1,left})/(1 + D(x_{i-1,left}) * x_{i-1,right} + G(x_{i-1,left})^2)$$

$$; x_{i,right} = scale(c, x_{i-1,left}) * x_{i-1,right} + offset(c, x_{i-1,left});$$

$$x_{i,right} = offset(c, x_{i-1,left}) + scale(c, x_{i-1,left}) * x_{i-1,right} + C(c, x_{i-1,left})/(1 + D(c, x_{i-1,left}) * x_{i-1,right} + G(c, x_{i-1,left})^2)$$

7. A machine learnable system (110) as in claim 6, wherein one or more of the normalizing flow sub-functions are non-linear (e.g.,

$$x_{i,right} = offset(x_{i-1,left}) + scale(x_{i-1,left}) * x_{i-1,right} + C(x_{i-1,left})/(1 + D(x_{i-1,left}) * x_{i-1,right} + G(x_{i-1,left})^2)$$

$$x_{i,right} = offset(c, x_{i-1,left}) + scale(c, x_{i-1,left}) * x_{i-1,right} + C(c, x_{i-1,left})/(1 + D(c, x_{i-1,left}) * x_{i-1,right} + G(c, x_{i-1,left})^2)$$

8. A machine learnable system (110) as in any one of the preceding claims, wherein the encoder function is arranged to generate parameters defining at least a mean value of a probability distribution, a function output of the encoder function being determined by sampling the defined probability distribution having the generated mean value, wherein the probability distributions defined by the encoder function have a predetermined variance.

9. A machine learnable data generation system (160), the system comprising

- a processor system (170) configured for
- an inverse normalizing flow function mapping a base point ($e$) to a latent representation in a latent space ($Z$), ($z = f^{-1}(z)$), and
- a decoder function mapping the latent representation ($z$) in the latent space ($Z$) to a target data representation ($x = DEC(z)$) in the target space ($X$), an encoder function being defined corresponding to the decoder function, wherein the encoder function and decoder function are arranged to generate parameters defining at least a mean value of a probability distribution, a function output of the encoder function and decoder function being determined by sampling the defined probability distribution having the generated mean value, wherein the probability distributions defined by the encoder function have a predetermined variance, the decoder function and normalizing flow function having been learned according to a machine learnable system as in Claim 1,
- determining a target data by
- obtaining a base point (e) in a base space, the base space having a predetermined probability distribution,
- applying the inverse normalizing flow function to the base point to obtain a latent representation,
- applying the decoder function to the latent representation to obtain the target data.

10. A machine learnable data generation system (160) as in Claim 9, wherein

**EP 3 767 533 B1**

- the base point (e) is sampled from a base space (E) according to the predetermined probability distribution.

11. A machine learnable data generation system (160) as in Claim 10, wherein the base point is sampled from the base space multiple times, and wherein at least a part of corresponding multiple target data are averaged.

12. A machine learning method, the method comprising

- accessing a stored set of training target data ($x$), the target data comprising sensor data, comprising image data or lidar data,
- mapping a target data ($x$) in a target space ($X$) to a latent representation ($z = ENC(x)$) in a latent space ($Z$) using an encoder function
- mapping a latent representation ($z$) in the latent space ($Z$) to a target data representation ($x = DEC(z)$) in the target space ($X$) using a decoder function, wherein the encoder function and decoder function are arranged to generate parameters defining at least a mean value of a probability distribution, a function output of the encoder function and decoder function being determined by sampling the defined probability distribution having the generated mean value, wherein the probability distributions defined by the encoder function have a predetermined variance,
- mapping a latent representation ($z$) to a base point ($e = f(z, c)$) in a base space ($E$), the base space having a predetermined probability distribution, using a normalizing flow function, the encoder function, decoder function and normalizing flow function being machine learnable functions, the normalizing flow function being invertible, wherein the normalizing flow function is a non-linear conditional normalizing flow function mapping a latent representation ($z$) to a base point ($e - f(z)$; $e - f(z,c)$) in the base space conditional on conditioning data ($c$),
- training the encoder function, decoder function and normalizing flow on the set of training target data, the training comprising minimizing a reconstruction loss of the concatenation of the encoder function and the decoder function, and to minimize a difference between the predetermined probability distribution on the base space and the concatenation of encoder and the normalizing flow function applied to the set of training target data.

13. A machine learnable data generation method, the method comprising

- mapping a base point (e) to a latent representation in a latent space ($Z$), ($z = f^1(z)$) using an inverse normalizing flow function,
- mapping the latent representation (z) in the latent space (Z) to a target data representation *($x = DEC(z))$* in the target space *(X)* using a decoder function, an encoder function being defined corresponding to the decoder function, wherein the encoder function and decoder function are arranged to generate parameters defining at least a mean value of a probability distribution, a function output of the encoder function and decoder function being determined by sampling the defined probability distribution having the generated mean value, wherein the probability distributions defined by the encoder function have a predetermined variance, the decoder function and normalizing flow function having been learned according to a machine learnable system as in Claim 1,
- determining a target data by
- obtaining a base point (e) in a base space, the base space having a predetermined probability distribution,
- applying the inverse normalizing flow function to the base point to obtain a latent representation,
- applying the decoder function to the latent representation to obtain the target data.

14. A transitory or non-transitory computer readable medium (1000) comprising data (1020) representing instructions, which when executed by a processor system, cause the processor system to perform the method according to Claim 12 or 13.

**Patentansprüche**

1. Maschinenlernendes System (110) mit normalisierender Strömung zum Trainieren einer Decodiererfunktion, einer Codiererfunktion und einer Normalisierungsflussfunktion zur Verwendung mit einem Sensordatengenerierungssystem, wobei die normalisierende Strömung eine nichtlineare bedingte Normalisierungsflussfunktion ist, die eine latente Darstellung (Z) zu einem Basispunkt (e - f(z); e - f(z, c)) in einem Basisraum (E) in Abhängigkeit von Konditionierungsdaten (c) zuordnet, das System umfassend

- einen Trainingsspeicher (112), der einen Satz von Trainingszieldaten (x) umfasst, wobei die Zieldaten Sensordaten umfassen, wobei die Sensordaten Bilddaten oder Lidardaten umfassen,

20

- ein Prozessorsystem (130), das konfiguriert ist für

- eine Codiererfunktion, die Zieldaten (x) in einem Zielraum (X) zu einer latenten Darstellung (z = ENC(x)) in einem latenten Raum (Z) zuordnet,

- eine Decodiererfunktion, die eine latente Darstellung (z) im latenten Raum (Z) zu einer Zieldatendarstellung (x = DEC(z)) im Zielraum (X) zuordnet, wobei die Codiererfunktion und die Decodiererfunktion dazu eingerichtet sind, Parameter zu erzeugen, die zumindest einen Mittelwert einer Wahrscheinlichkeitsverteilung definieren, wobei eine Funktionsausgabe der Codiererfunktion und der Decodiererfunktion durch Abtasten der definierten Wahrscheinlichkeitsverteilung mit dem erzeugten Mittelwert bestimmt wird, wobei die durch die Codiererfunktion definierten Wahrscheinlichkeitsverteilungen eine vorgegebene Varianz aufweisen,

- eine Funktion einer normalisierenden Strömung, die eine latente Darstellung (z) einem Basispunkt (e = f(z)) in einem Basisraum (E) zuordnet, wobei der Basisraum eine vorgegebene Wahrscheinlichkeitsverteilung aufweist, wobei die Codiererfunktion, die Decodiererfunktion und die Funktion der normalisierenden Strömung maschinenlernende Funktionen sind, wobei die Funktion der normalisierenden Strömung invertierbar ist, und wobei das Prozessorsystem ferner dazu konfiguriert ist,

- die Codiererfunktion, die Decodiererfunktion und die normalisierende Strömung anhand des Satzes von Trainingszieldaten zu trainieren, wobei das Training das Minimieren eines Rekonstruktionsverlustes der Verkettung der Codiererfunktion und der Decodiererfunktion umfasst, und um eine Differenz zwischen der vorgegebenen Wahrscheinlichkeitsverteilung im Basisraum und der Verkettung der Codiererfunktion und der auf den Satz von Trainingszieldaten angewandten Funktion der normalisierenden Strömung zu minimieren.

2. Maschinenlernendes System (110) nach einem der vorhergehenden Ansprüche, wobei die Codiererfunktion und die Decodiererfunktion eine Gaußsche Wahrscheinlichkeitsverteilung definieren.

3. Maschinenlernendes System (110) nach einem der vorhergehenden Ansprüche, wobei die Decodiererfunktion einen Mittelwert und eine Varianz erzeugt, wobei der Mittelwert und die Varianz lernbare Parameter sind.

4. Maschinenlernendes System (110) nach einem der vorhergehenden Ansprüche, wobei das Training das Maximieren einer unteren Schranke der Evidenz (Evidence Lower Bound, ELBO) umfasst, die eine untere Schranke der Wahrscheinlichkeit (p(x)) von Trainingszieldaten (x) ist, wobei die ELBO definiert ist als:

$$p(x) >= \text{Expectation}_{z \sim q} \log(p(x|z)) - KL(q(z|x)||p(z))$$

wobei $KL(q(z|x) \| p(z))$ die Kullback-Leibler-Divergenz der Wahrscheinlichkeitsverteilungen $q(z|x)$ und $p(z)$ ist, wobei die Wahrscheinlichkeitsverteilungen $p(z)$ durch die Basisverteilung und die normalisierende Strömung definiert sind.

5. Maschinenlernendes System (110) nach Anspruch 1, wobei

- Konditionierungsdaten (c) in einem Trainingspaar vergangene Trajektorieninformationen eines Verkehrsteilnehmers umfassen, und wobei das Generierungsziel (x) zukünftige Trajektorieninformationen des Verkehrsteilnehmers umfasst, oder
- Konditionierungsdaten (c) in einem Trainingspaar Sensorinformationen umfassen und wobei das Generierungsziel (x) eine Klassifikation umfasst.

6. Maschinenlernendes System (110) nach einem der vorhergehenden Ansprüche, wobei die bedingte Funktion der normalisierenden Strömung eine Folge einer Mehrzahl invertierbarer Teilfunktionen einer normalisierenden Strömung umfasst, wobei ein oder mehrere Parameter der Mehrzahl invertierbarer Teilfunktionen einer normalisierenden Strömung durch ein neuronales Netz erzeugt werden (z. B.

$$x_{i,right} = \text{scale}(x_{i-1,left}) * x_{i-1,right} + \text{offset}(x_{i-1,left});$$

$$x_{i,right} = \text{offset}(x_{i-1,left}) + \text{scale}(x_{i-1,left}) * x_{i-1,right} + C(x_{i-1,left})/1 + D(x_{i-1,left}) * x_{i-1,right} +$$

$$G(x_{i-1,left})^2)$$

$$; x_{i,\text{right}} = \text{scale}(c, x_{i-1,\text{left}}) * x_{i-1,\text{right}} + \text{offset}(c, x_{i-1,\text{left}});$$

$$x_{i,\text{right}} = \text{offset}(c, x_{i-1,\text{left}}) + \text{scale}(c, x_{i-1,\text{left}}) * x_{i-1,\text{right}} + C(c, x_{i-1,\text{left}})/(1 + D(c, x_{i-1,\text{left}}) * x_{i-1,\text{right}} + G(c, x_{i-1,\text{left}})^2).$$

**7.** Maschinenlernendes System (110) nach Anspruch 6, wobei eine oder mehrere der Teilfunktionen der normalisierenden Strömung nichtlinear sind (z. B.

$$x_{i,\text{right}} = \text{offset}(x_{i-1,\text{left}}) + \text{scale}(x_{i-1,\text{left}}) * x_{i-1,\text{right}} + C(x_{i-1,\text{left}})/(1 + D(x_{i-1,\text{left}}) * x_{i-1,\text{right}} + G(x_{i-1,\text{left}})^2)$$

$$x_{i,\text{right}} = \text{offset}(c, x_{i-1,\text{left}}) + \text{scale}(c, x_{i-1,\text{left}}) * x_{i-1,\text{right}} + C(c, x_{i-1,\text{left}})/(1 + D(c, x_{i-1,\text{left}}) * x_{i-1,\text{right}} + G(c, x_{i-1,\text{left}})^2)$$

**8.** Maschinenlernendes System (110) nach einem der vorhergehenden Ansprüche, wobei die Codiererfunktion dazu eingerichtet ist, Parameter zu erzeugen, die zumindest einen Mittelwert einer Wahrscheinlichkeitsverteilung definieren, wobei eine Funktionsausgabe der Codiererfunktion durch Abtasten der definierten Wahrscheinlichkeitsverteilung mit dem erzeugten Mittelwert bestimmt wird, wobei die durch die Codiererfunktion definierten Wahrscheinlichkeitsverteilungen eine vorgegebene Varianz aufweisen.

**9.** Maschinenlernendes Datengenerierungssystem (160), das System umfassend

- ein Prozessorsystem (170), das konfiguriert ist für
- eine inverse Funktion der normalisierenden Strömung, die einen Basispunkt (e) einer latenten Darstellung in einem latenten Raum (Z), (z = f⁻¹(z)) zuordnet, und
- eine Decodiererfunktion, die die latente Darstellung (z) im latenten Raum (Z) einer Zieldatendarstellung (x = DEC(z)) im Zielraum (X) zuordnet, wobei eine Codiererfunktion entsprechend der Decodiererfunktion definiert ist, wobei die Codiererfunktion und die Decodiererfunktion dazu eingerichtet sind, Parameter zu erzeugen, die zumindest einen Mittelwert einer Wahrscheinlichkeitsverteilung definieren, wobei eine Funktionsausgabe der Codiererfunktion und der Decodiererfunktion durch Abtasten der definierten Wahrscheinlichkeitsverteilung mit dem erzeugten Mittelwert bestimmt wird, wobei die durch die Codiererfunktion definierten Wahrscheinlichkeitsverteilungen eine vorgegebene Varianz aufweisen, wobei die Decodiererfunktion und die Funktion der normalisierenden Strömung gemäß einem maschinenlernenden System nach Anspruch 1 erlernt worden sind,
- Bestimmen von Zieldaten durch
- Erhalten eines Basispunkts (e) in einem Basisraum, wobei der Basisraum eine vorgegebene Wahrscheinlichkeitsverteilung aufweist,
- Anwenden der inversen Funktion der normalisierenden Strömung auf den Basispunkt, um eine latente Darstellung zu erhalten,
- Anwenden der Decodiererfunktion auf die latente Darstellung, um die Zieldaten zu erhalten.

**10.** Maschinenlernendes Datengenerierungssystem (160) nach Anspruch 9, wobei

- der Basispunkt (e) aus einem Basisraum (E) gemäß der vorgegebenen Wahrscheinlichkeitsverteilung abgetastet wird.

**11.** Maschinenlernendes Datengenerierungssystem (160) nach Anspruch 10, wobei der Basispunkt mehrfach aus dem Basisraum abgetastet wird, und wobei zumindest ein Teil der entsprechenden Mehrzahl von Zieldaten gemittelt wird.

**12.** Computerimplementiertes maschinenlernendes Verfahren, das Verfahren umfassend

- Zugreifen auf einen gespeicherten Satz von Trainingszieldaten (x), wobei die Zieldaten Sensordaten umfassen, die Bilddaten oder Lidardaten umfassen,
- Zuordnen von Zieldaten (x) in einem Zielraum (X) zu einer latenten Darstellung (z = ENC(x)) in einem latenten Raum (Z) unter Verwendung einer Codiererfunktion,

- Zuordnen einer latenten Darstellung (z) in dem latenten Raum (Z) zu einer Zieldatendarstellung (x = DEC(z)) in dem Zielraum (X) unter Verwendung einer Decodiererfunktion, wobei die Codiererfunktion und die Decodiererfunktion dazu eingerichtet sind, Parameter zu erzeugen, die zumindest einen Mittelwert einer Wahrscheinlichkeitsverteilung definieren, wobei eine Funktionsausgabe der Codiererfunktion und der Decodiererfunktion durch Abtasten der definierten Wahrscheinlichkeitsverteilung mit dem erzeugten Mittelwert bestimmt wird, wobei die durch die Codiererfunktion definierten Wahrscheinlichkeitsverteilungen eine vorgegebene Varianz aufweisen,

- Zuordnen einer latenten Darstellung (z) zu einem Basispunkt (e = f(z, c)) in einem Basisraum (E), wobei der Basisraum eine vorgegebene Wahrscheinlichkeitsverteilung aufweist, unter Verwendung einer Funktion einer normalisierenden Strömung, wobei die Codiererfunktion, die Decodiererfunktion und die Funktion der normalisierenden Strömung maschinenlernende Funktionen sind, wobei die Funktion der normalisierenden Strömung invertierbar ist, wobei die Funktion der normalisierenden Strömung eine nichtlineare bedingte Funktion einer normalisierenden Strömung ist, die eine latente Darstellung (Z) einem Basispunkt (e - f(z); e - f(z,c)) in dem Basisraum in Abhängigkeit von Konditionierungsdaten (C) zuordnet,

- Trainieren der Codiererfunktion, der Decodiererfunktion und der normalisierenden Strömung anhand des Satzes von Trainingszieldaten, wobei das Training das Minimieren eines Rekonstruktionsverlustes der Verkettung der Codiererfunktion und der Decodiererfunktion umfasst, und um eine Differenz zwischen der vorgegebenen Wahrscheinlichkeitsverteilung im Basisraum und der Verkettung der Codiererfunktion und der auf den Satz von Trainingszieldaten angewandten Funktion der normalisierenden Strömung zu minimieren.

**13.** Maschinenlernendes Datengenerierungsverfahren, das Verfahren umfassend

- Zuordnen eines Basispunkts (e) zu einer latenten Darstellung in einem latenten Raum (Z), ($z = f^{-1}(z)$) unter Verwendung einer inversen Funktion der normalisierenden Strömung,

- Zuordnen der latenten Darstellung (z) in dem latenten Raum (Z) zu einer Zieldatendarstellung (x = DEC(z)) in dem Zielraum (X) unter Verwendung einer Decodiererfunktion, wobei eine Codiererfunktion entsprechend der Decodiererfunktion definiert ist, wobei die Codiererfunktion und die Decodiererfunktion dazu eingerichtet sind, Parameter zu erzeugen, die zumindest einen Mittelwert einer Wahrscheinlichkeitsverteilung definieren, wobei eine Funktionsausgabe der Codiererfunktion und der Decodiererfunktion durch Abtasten der definierten Wahrscheinlichkeitsverteilung mit dem erzeugten Mittelwert bestimmt wird, wobei die durch die Codiererfunktion definierten Wahrscheinlichkeitsverteilungen eine vorgegebene Varianz aufweisen, wobei die Decodiererfunktion und die Funktion der normalisierenden Strömung gemäß einem maschinenlernenden System nach Anspruch 1 erlernt worden sind,

- Bestimmen von Zieldaten durch

- Erhalten eines Basispunkts (e) in einem Basisraum, wobei der Basisraum eine vorgegebene Wahrscheinlichkeitsverteilung aufweist,

- Anwenden der inversen Funktion der normalisierenden Strömung auf den Basispunkt, um eine latente Darstellung zu erhalten,

- Anwenden der Decodiererfunktion auf die latente Darstellung, um die Zieldaten zu erhalten.

**14.** Flüchtiges oder nichtflüchtiges computerlesbares Medium (1000), das Daten (1020) umfasst, die Anweisungen darstellen, die bei Ausführung durch ein Prozessorsystem das Prozessorsystem dazu veranlassen, das Verfahren nach Anspruch 12 oder 13 durchzuführen.

**Revendications**

**1.** Système pouvant être appris par machine (110) pour apprendre une fonction de décodeur, une fonction de codeur et une fonction à flux de normalisation à utiliser avec un système de génération de données de capteur, le flux de normalisation étant une fonction à flux de normalisation conditionnelle non linéaire mettant en correspondance une représentation latente (Z) avec un point de base (e - f(z); e - f(z, c)) dans un espace de base (E) conditionné à des données de conditionnement (c), le système comprenant

- un stockage d'apprentissage (112) comprenant un ensemble de données cibles d'apprentissage (x), les données cibles comprenant des données de capteur, les données de capteur comprenant des données d'image ou des données lidar,

- un système de processeur (130) configuré pour

- une fonction de codeur mettant en correspondance des données cibles (x) dans un espace cible (X) avec une représentation latente (z = ENC(x)) dans un espace latent (Z),

- une fonction de décodeur mettant en correspondance une représentation latente (z) dans l'espace latent (Z) avec une représentation de données cibles (x = DEC(z)) dans l'espace cible (X), la fonction de codeur et la fonction de décodeur étant agencées pour générer des paramètres définissant au moins une valeur moyenne d'une distribution de probabilité, une sortie de fonction de la fonction de codeur et de la fonction de décodeur étant déterminée en échantillonnant la distribution de probabilité définie ayant la valeur moyenne générée, les distributions de probabilités définies par la fonction de codeur ayant une variance prédéterminée,
- une fonction à flux de normalisation mettant en correspondance une représentation latente (z) avec un point de base (e = f(z)) dans un espace de base (E), l'espace de base ayant une distribution de probabilité prédéterminée, la fonction de codeur, la fonction de décodeur et la fonction à flux de normalisation étant des fonctions pouvant être apprises par machine, la fonction à flux de normalisation étant inversible, le système de processeur étant en outre configuré pour
- entraîner la fonction de codeur, la fonction de décodeur et le flux de normalisation sur l'ensemble de données cibles d'apprentissage, l'apprentissage comprenant la minimisation d'une perte de reconstruction de la concaténation de la fonction de codeur et de la fonction de décodeur, et minimiser une différence entre la distribution de probabilité prédéterminée sur l'espace de base et la concaténation du codeur et la fonction à flux de normalisation appliquée à l'ensemble de données cibles d'apprentissage.

2. Système pouvant être appris par machine (110) selon l'une quelconque des revendications précédentes, la fonction de codeur et les fonctions de décodeur définissant une distribution de probabilité gaussienne.

3. Système pouvant être appris par machine (110) selon l'une quelconque des revendications précédentes, la fonction de décodeur générant une moyenne et une variance, lesdites moyenne et variance étant des paramètres pouvant être appris.

4. Système pouvant être appris par machine (110) selon l'une quelconque des revendications précédentes, l'apprentissage comprenant la maximisation d'une borne inférieure de preuve (ELBO) qui est une borne inférieure sur la probabilité (p(x)) de données cibles d'apprentissage (x), l'ELBO étant défini comme étant

$$p(x) >= Espérance_{z \sim q} \; log(p(x|z)) - KL(q(z|x)\|p(z))$$

$KL(q(z|x)\|p(z))$ étant la divergence de Kullback-Leibler des distributions de probabilité $q(z|x)$ et $p(z)$, les distributions de probabilité $p(z)$ étant définies par la distribution de base et le flux de normalisation.

5. Système pouvant être appris par machine (110) selon la revendication 1,

- des données de conditionnement (c) dans une paire d'apprentissage comprenant des informations de trajectoire passées d'un participant au trafic, et la cible (x) de génération comprenant des informations de trajectoire futures du participant au trafic, ou
- des données de conditionnement (c) dans une paire d'apprentissage comprenant des informations de capteurs, et la cible (x) de génération comprenant une classification.

6. Système pouvant être appris par machine (110) selon l'une quelconque des revendications précédentes, la fonction à flux de normalisation conditionnelle comprenant une séquence de multiples sous-fonctions à flux de normalisation inversibles, un ou plusieurs paramètres des multiples sous-fonctions à flux de normalisation inversibles étant générés par un réseau neuronal (par exemple,

$$x_{i, \, droite} = \text{mise à l'échelle}(x_{i-1, \, gauche}) * x_{i-1, \, droite} + \text{décalage}(x_{i-1, \, gauche}) \; ;$$

$$x_{i, \, droite} = \text{décalage}(x_{i-1, \, gauche}) + \text{mise à l'échelle}(x_{i-1, \, gauche}) * x_{i-1, \, droite} + C(x_{i-1, \, gauche})/(1 + D\,(x_{i-1, \, gauche}) * x_{i-1, \, droite} + G\,(x_{i-1, \, gauche})^2) \; ;$$

$$x_{i, \, droite} = \text{mise à l'échelle}(c, \, x_{i-1, \, gauche}) * x_{i-1, \, droite} + \text{décalage}(c, \, x_{i-1, \, gauche}) \; ;$$

$x_{i,\,droite}$ = décatage(c, $X_{i-1,\,gauche}$) + mise à l'échelle (c, $x_{i-1,\,gauche}$) * $x_{i-1,\,droite}$ + C(c, $x_{i-1,\,gauche}$)/(1 + D(c, $x_{i-1,\,gauche}$) * $X_{i-1,\,droite}$ + G(c, $x_{i-1,\,gauche}$)²)

7. Système pouvant être appris par machine (110) selon la revendication 6, une ou plusieurs des sous-fonctions à flux de normalisation étant non linéaires (par exemple,

$x_{i,\,droite}$ = décalage($x_{i-1,\,gauche}$) + mise à l'échelle($x_{i-1,\,gauche}$) * $x_{i-1,\,droite}$ + C($x_{i-1,\,gauche}$)/(1 + d($x_{i-1,\,gauche}$) * $x_{i-1,\,droite}$ + G($x_{i-1,\,gauche}$)²)

$x_{i,\,droite}$ = décatage(c, $x_{i-1,\,gauche}$) + mise à l'échelle(c, $x_{i-1,\,gauche}$) * $x_{i-1,\,droite}$ + C(c, $X_{i-1,\,gauche}$)/(1 + d(c, $x_{i-1,\,gauche}$) * $x_{i-1,\,droite}$ + G(c, $x_{i-1,\,gauche}$)²)

8. Système pouvant être appris par machine (110) selon l'une quelconque des revendications précédentes, la fonction de codeur étant agencée pour générer des paramètres définissant au moins une valeur moyenne d'une distribution de probabilité, une sortie de fonction de la fonction de codeur étant déterminée en échantillonnant la distribution de probabilité définie ayant la valeur moyenne générée, les distributions de probabilité définies par la fonction de codeur ayant une variance prédéterminée.

9. Système de génération de données pouvant être appris par machine (160), le système comprenant

   - un système de processeur (170) configuré pour
   - une fonction à flux de normalisation inverse mettant en correspondance un point de base (e) avec une représentation latente dans un espace latent (Z), (z = f⁻¹(z)), et
   - une fonction de décodeur mettant en correspondance la représentation latente (z) dans l'espace latent (Z) avec une représentation de données cibles (x = DEC(z)) dans l'espace cible (X), une fonction de codeur étant définie correspondant à la fonction de décodeur, les fonction de codeur et fonction de décodeur étant agencées pour générer des paramètres définissant au moins une valeur moyenne d'une distribution de probabilité, une sortie de fonction de la fonction de codeur et de la fonction de décodeur étant déterminée en échantillonnant la distribution de probabilité définie ayant la valeur moyenne générée, les distributions de probabilité définies par la fonction de codeur ayant une variance prédéterminée, la fonction de décodeur et la fonction à flux de normalisation ayant été apprises conformément à un système pouvant être appris par machine selon la revendication 1,
   - la détermination de données cibles par
   - l'obtention d'un point de base (e) dans un espace de base, l'espace de base ayant une distribution de probabilité prédéterminée,
   - l'application de la fonction à flux de normalisation inverse au point de base pour obtenir une représentation latente,
   - l'application de la fonction de décodeur à la représentation latente pour obtenir les données cibles.

10. Système (160) de génération de données pouvant être apprises par machine selon la revendication 9,

   - le point de base (e) étant échantillonné à partir d'un espace de base (E) selon la distribution de probabilité prédéterminée.

11. Système de génération de données pouvant être apprises par machine (160) selon la revendication 10, le point de base étant échantillonné à partir de l'espace de base plusieurs fois, et au moins une partie des données cibles multiples correspondantes étant moyennées.

12. Procédé d'apprentissage machine, le procédé comprenant

   - l'accès à un ensemble de données cibles d'apprentissage stocké (x), les données cibles comprenant des données de capteur, comprenant des données d'image ou des données lidar,
   - la mise en correspondance de données cibles (x) dans un espace cible (X) avec une représentation latente (z = ENC(x)) dans un espace latent (Z) à l'aide d'une fonction de codeur
   - la mise en correspondance d'une représentation latente (z) dans l'espace latent (Z) avec une représentation de données cibles (*x = DEC(z)*) dans l'espace cible (X) à l'aide d'une fonction de décodeur, les fonction de codeur et fonction de décodeur étant agencées pour générer des paramètres définissant au moins une valeur moyenne d'une distribution de probabilité, une sortie de la fonction de codeur et de la fonction de décodeur étant déterminée en échantillonnant la distribution de probabilité définie ayant la valeur moyenne générée, les distributions de probabilités définies par la fonction de codeur ayant une variance prédéterminée,

- la mise en correspondance d'une représentation latente (z) avec un point de base (e = f(z, c)) dans un espace de base (E), l'espace de base ayant une distribution de probabilité prédéterminée, à l'aide d'une fonction à flux de normalisation, la fonction de codeur, la fonction de décodeur et la fonction à flux de normalisation étant des fonctions pouvant être apprises par machine, la fonction à flux de normalisation étant inversible, la fonction à flux de normalisation étant une fonction à flux de normalisation conditionnelle non linéaire mettant en correspondance une représentation latente (Z) avec un point de base (e - f(z) ; e - f(z, c)) dans l'espace de base conditionné à des données de conditionnement (C),

- l'apprentissage de la fonction de codeur, de la fonction de décodeur et du flux de normalisation sur l'ensemble de données cibles d'apprentissage, l'apprentissage comprenant la minimisation d'une perte de reconstruction de la concaténation de la fonction de codeur et de la fonction de décodeur, et pour minimiser une différence entre la distribution de probabilité prédéterminée sur l'espace de base et la concaténation du codeur et la fonction à flux de normalisation appliquée à l'ensemble de données cibles d'apprentissage.

13. Procédé de génération de données pouvant être apprises par machine, le procédé comprenant

- la mise en correspondance d'un point de base (e) sur une représentation latente dans un espace latent *(Z), (z = f⁻¹(z))* à l'aide d'une fonction à flux de normalisation inverse,

- la mise en correspondance de la représentation latente *(z)* dans l'espace latent (Z) avec une représentation de données cibles *(x = DEC(z))* dans l'espace cible *(X)* en utilisant une fonction de décodeur, une fonction de codeur étant définie correspondant à la fonction de décodeur, les fonction de codeur et fonction de décodeur étant agencées pour générer des paramètres définissant au moins une valeur moyenne d'une distribution de probabilité, une sortie de fonction de la fonction de codeur et de la fonction de décodeur étant déterminée en échantillonnant la distribution de probabilité définie ayant la valeur moyenne générée, les distributions de probabilité définies par la fonction de codeur ayant une variance prédéterminée, la fonction de décodeur et la fonction à flux de normalisation ayant été apprises conformément à un système pouvant être appris par machine selon la revendication 1,

- la détermination de données cibles par

- l'obtention d'un point de base *(e)* dans un espace de base, l'espace de base ayant une distribution de probabilité prédéterminée,

- l'application de la fonction à flux de normalisation inverse au point de base pour obtenir une représentation latente,

- l'application de la fonction de décodeur à la représentation latente pour obtenir les données cibles.

14. Support lisible par ordinateur transitoire ou non transitoire (1000) comprenant des données (1020) représentant des instructions qui, lorsqu'elles sont exécutées par un système de processeur, amènent le système de processeur à réaliser le procédé selon la revendication 12 ou 13.

Fig. 1a

Fig. 1b

160 — 170

180

190

**Fig. 1c**

160 —

181

172 — 182

173 — 183

184

**Fig. 1d**

210 221 220

211

222

230

**Fig. 2a**

210 221 220

211 240

222

230

**Fig. 2b**

Fig. 2c

Fig. 2d

Fig. 3a

Fig. 3b

**Fig. 4a**

Fig. 4b

Fig. 4c

Fig. 4d.1

Fig. 4d.2

Fig. 4d.3

Fig. 5a

Fig. 5b

**Fig. 6a**

**Fig. 6b**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019095798 A1

**Non-patent literature cited in the description**

- **YOU LOU**. Structured Output Learning with Conditional Generative Flows. *arXiv:1905.13288*, 30 May 2019, https://arxiv.org/abs/1905.13288
- **ZACHARY M ZIEGLER et al.** Latent Normalizing Flows for Discrete Sequences. *arXiv:1901.10548*, 04 June 2019, https://arxiv.org/abs/1901.10548
- **TOMCZAK JAKUB M et al.** *Improving Variational Auto-Encoders using Householder Flow*, 17 January 2017, 1-8, https://arxiv.org/pdf/1611.09630
- **A. ATANOV**. *Semi-conditional normalizing flows for semi-supervised learning*